# EUROPEAN PATENT APPLICATION

(11) **EP 4 456 655 A1**
(43) Date of publication of application: **30.10.2024**
(21) Application number: 23746152.0
(22) Date of filing: 17.01.2023
(51) Int. Cl.: H04W 76/15

(54) **COMMUNICATION METHOD AND APPARATUS**

(30) Priority: 29.01.2022 CN 202210113009; 28.03.2022 CN 202210317156
(71) Applicant: Huawei Technologies Co., Ltd., Shenzhen, Guangdong 518129 (CN)
(72) Inventor: YU, Youyang, Shenzhen, Guangdong 518129 (CN); SHI, Shufeng, Shenzhen, Guangdong 518129 (CN)
(74) Representative: Pfenning, Meinig & Partner mbB
(86) International application number: PCT/CN2023/072704
(87) International publication number: WO 2023/143270

(57) **Abstract**

A communication method and apparatus are provided. The method includes: A session management network element establishes a first connection of user equipment by using a first non-3GPP access gateway; receives a request message, where the request message is used to request to establish a second connection of the user equipment by using a second non-3GPP access gateway; determines, based on the request message, to switch from the first connection to the second connection; and sends, to an access management network element, session management information and access gateway information corresponding to the session management information, to implement switching of a service flow between non-3GPP access gateways.

## Description

### CROSS-REFERENCE TO RELATED APPLICATIONS

This application claims priority to Chinese Patent Application No. 202210113009.8, filed with the China National Intellectual Property Administration on January 29, 2022 and entitled "COMMUNICATION METHOD AND APPARATUS", which is incorporated herein by reference in its entirety. This application claims priority to Chinese Patent Application No. 202210317156.7, filed with the China National Intellectual Property Administration on March 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The 3rd generation partnership project (3rd generation partnership project, 3GPP) formulates a 5th generation (5th generation, 5G) network architecture. The 5G network architecture supports access to a core network by using a wireless access technology defined by the 3GPP, and further supports access to the core network by using a non-3GPP access technology.

A session supports access to the core network by using a plurality of access technologies, to implement movement and concurrency of service flows between different access technologies. For example, the session may access the core network by using a first access technology. A service flow 1 of the session is transmitted by using the first access technology. A subsequent session may access the core network by using a second access technology. The service flow 1 moves and is transmitted by using the second access technology.

However, service flow switching of the session supports only switching between an access gateway of the 3GPP access technology and an access gateway of the non-3GPP access technology, and does not support switching between access gateways of the non-3GPP access technology.

### SUMMARY

Embodiments of this application provide a communication method and apparatus, to implement switching of a service flow between access gateways of a non-3GPP access technology.

According to a first aspect, a communication method is provided, and includes the following process: A session management network element establishes a first connection of user equipment by using a first non-3GPP access gateway. The session management network element receives a request message, and the request message is used to request to establish a second connection of the user equipment by using a second non-3GPP access gateway. The session management network element determines, based on the request message, to switch from the first connection to the second connection. The session management network element sends, to an access management network element, session management information and access gateway information corresponding to the session management information.

The access gateway information is used to determine an access gateway. More specifically, the access gateway information is used to determine a non-3GPP access gateway (for example, the first non-3GPP access gateway or the second non-3GPP access gateway). The non-3GPP access gateway is an access gateway used when the user equipment accesses a core network by using the non-3GPP access technology. The non-3GPP access gateway supports the non-3GPP access technology.

When the session management network element establishes the first connection of the user equipment by using the first non-3GPP access gateway, the user equipment may initiate a session establishment procedure, to implement establishment of the first connection. In a possible scenario, the user equipment establishes the first connection by using the first non-3GPP access gateway, and accesses the core network. When the non-3GPP access gateway changes due to factors, such as movement of the user equipment, or the non-3GPP access gateway changes due to factors, such as a poor network status, or the non-3GPP access gateway changes due to a change of a non-3GPP access point caused by movement of the user equipment or a poor network status, the session management network element may implement switching from the first connection to the second connection, namely, implement switching from the first non-3GPP access network to the second non-3GPP access gateway. The non-3GPP access point is an access network device between the user equipment and the non-3GPP access gateway.

The session management network element may receive the request message sent by the access management network element. For example, the user equipment may send, to the access management network element by using the second non-3GPP access gateway, indication information used to request to establish the second connection by using the second non-3GPP access gateway, and the access management network element sends the request message to the session management network element based on the indication information.

The first connection corresponds to the first non-3GPP access gateway, and the second connection corresponds to the second non-3GPP access gateway. In a possible example, the first connection is a non-3GPP path established by using the first non-3GPP access gateway, and includes a control plane connection and/or a user plane connection. The second connection is a non-3GPP path established by using the second non-3GPP access gateway, and includes the control plane connection and/or the user plane connection. The user plane connection is one or more user plane connections related to a session. That the session management network element determines (needs/expects/wants/allows) to switch from the first connection to the second connection may also be understood as that switching from the first non-3GPP access gateway to the second non-3GPP access gateway is determined (needs/is expected/is wanted/is allowed) to be performed.

Optionally, the session management network element sends the session management information and the corresponding access gateway information to the access management network element, to indicate the access management network element to send the session management information to the first non-3GPP access gateway and/or the second non-3GPP access gateway, for releasing the first connection and/or establishing the second connection, so as to switch from the first connection to the second connection.

The access gateway information is indication information of a non-3GPP radio access type, and the indication information of the non-3GPP radio access type is used to determine an access gateway. The indication information of the non-3GPP radio access type includes indication information of an untrusted non-3GPP (non-3GPP) access type, indication information of a trusted non-3GPP access type, indication information of an untrusted wireless local area network WLAN access type, or indication information of a trusted WLAN access type. In other words, the non-3GPP radio access type includes the untrusted non-3GPP access type, the trusted non-3GPP access type, the untrusted wireless local area network WLAN access type, or the trusted WLAN access type. The session management network element sends the indication information of the non-3GPP radio access type to the access management network element, so that the access management network element determines, based on the indication information, to send the session management information to a corresponding access gateway.

In the method, an access type of the first non-3GPP access gateway and an access type of the second non-3GPP access gateway may be the same or may be different. For example, when a non-3GPP access technology of the first connection is different from a non-3GPP access technology of the second connection, a radio access type of the first non-3GPP access gateway is also different from a radio access type of the second non-3GPP access gateway. Specifically, when the first connection is trusted non-3GPP access or trusted WLAN access, the first non-3GPP access gateway is a trusted non-3GPP access gateway (trusted non-3GPP gateway function, TNGF). When the second connection is untrusted non-3GPP access or untrusted WLAN access, the second non-3GPP access gateway is a non-3GPP interworking function (non-3GPP interworking function, N3IWF). Alternatively, when the first connection is untrusted non-3GPP access or untrusted WLAN access, the first non-3GPP access gateway is the N3IWF. When the second connection is trusted non-3GPP access or trusted WLAN access, the second non-3GPP access gateway is the TNGF.

In the method, the session management network element may establish the second connection and release the first connection, or the session management network element may establish the second connection and simultaneously maintain the first connection and the second connection. The reserved first connection and the reserved second connection may be used for data transmission.

In the method provided in this application, the session management network element determines, based on the request message, to switch from the first connection to the second connection; and sends, to the access management network element, the session management information and the corresponding access gateway information, to implement switching of a service flow between non-3GPP access gateways. In addition, the method may further ensure service continuity.

In a possible implementation, the request message includes first indication information, and the first indication information indicates to switch from the first connection to the second connection.

In this implementation, when the session management network element determines, based on the request message, to switch from the first connection to the second connection, the session management network element may determine, based on the first indication information, to switch from the first connection to the second connection. Optionally, when the access type of the first non-3GPP access gateway is the same as the access type of the second non-3GPP access gateway, the request message includes the first indication information.

In a possible implementation, the request message includes an access type of the second connection.

In this implementation, when the session management network element determines, based on the request message, to switch from the first connection to the second connection, the session management network element determines, based on the access type of the first connection and the access type of the second connection, to switch from the first connection to the second connection. Optionally, when the access type of the first non-3GPP access gateway is different from the access type of the second non-3GPP access gateway, the request message includes the access type of the second connection.

In a possible implementation, the access type of the first connection or the access type of the second connection may be the non-3GPP radio access type, that is, the untrusted non-3GPP access type, the trusted non-3GPP access type, the untrusted wireless local area network WLAN access type, or the trusted WLAN access type is included.

In a possible implementation, the request message includes the first indication information and the access type of the second connection.

In this implementation, when the session management network element determines, based on the request message, to switch from the first connection to the second connection, the session management network element determines, based on the first indication information, the access type of the first connection, and the access type of the second connection, to switch from the first connection to the second connection.

An access type is used to indicate a corresponding access technology. In an example, access types include wired access and wireless access. In another example, access types include trusted access and untrusted access. In still another example, access types include trusted non-3GPP access, untrusted non-3GPP access, and wired access. In still another example, access types include trusted wireless local area network (wireless local area network, WLAN) access and untrusted WLAN access.

In a possible implementation, the request message includes session identification information.

In this implementation, when the session management network element determines, based on the request message, to switch from the first connection to the second connection, the session management network element may determine, based on the session identification information, to switch a session identified by the session identification information from the first connection to the second connection. The session management network element may determine, based on the session identification information, which session is to be switched. In a possible example, the session management network element may determine, based on the first indication information and the session identification information, to switch the session from the first connection to the second connection. In another possible example, the session management network element may determine, based on the access type of the first connection, the access type of the second connection, and the session identification information, to switch the session from the first connection to the second connection.

In a possible implementation, the session management network element may further send the access type of the second connection to a policy control network element, and the access type of the second connection is used to determine a steering policy. Specifically, the access type of the second connection is used by the policy control network element to determine the steering policy. The steering policy is a steering mode, and the steering mode includes but is not limited to one or more of the following: an active/standby steering mode, a priority steering mode, a load balancing steering mode, or a lowest-latency steering mode.

The policy control network element may update the steering policy based on the access type of the second connection, or may keep a current steering policy unchanged, to implement switching of the service flow between the non-3GPP access gateways.

In a possible implementation, the session management information is information used to establish the second connection, and the access gateway information corresponding to the session management information is information about the second non-3GPP access gateway. An access gateway corresponding to the session management information is the second non-3GPP access gateway. Specifically, the session management network element sends, to the access management network element, the information used to establish the second connection and the information about the second non-3GPP access gateway, and the access management network element may send, to the second non-3GPP access gateway, the information used to establish the second connection. In this implementation, the second connection is established to implement switching from the first connection to the second connection and switching from the first non-3GPP access gateway to the second non-3GPP access gateway. In this way, service continuity is ensured.

The information about the second non-3GPP access gateway may include identification information of the second non-3GPP access gateway and/or address information of the second non-3GPP access gateway. For example, the address information of the second non-3GPP access gateway may include one or more of the following: an internet protocol (internet protocol, IP) address, a media access control (media access control, MAC) address, a fully qualified domain name (fully qualified domain name, FQDN), an Ethernet address, or a port number.

In a possible implementation, the session management network element may further send, based on the non-3GPP radio access type, the session management information to an access gateway corresponding to the non-3GPP radio access type. Specifically, when the non-3GPP access radio type is trusted non-3GPP access or trusted WLAN access, a corresponding access gateway is a TNGF. When the non-3GPP access type is untrusted non-3GPP access or untrusted WLAN access, a corresponding access gateway is an N3IWF.

In this implementation, the session management network element may send, by using the access management network element, the session management information to the access gateway corresponding to the non-3GPP radio access type.

In a possible implementation, the session management information is information used to release the first connection, and the access gateway information corresponding to the session management information is information about the first non-3GPP access gateway. An access gateway corresponding to the session management information is the first non-3GPP access gateway. Specifically, the session management network element sends, to the access management network element, the information used to release the first connection and the information about the first non-3GPP access gateway, and the access management network element may send, to the first non-3GPP access gateway, the information used to release the first connection.

The information about the first non-3GPP access gateway may include identification information of the first non-3 GPP access gateway and/or address information of the first non-3 GPP access gateway and/or a radio access technology type supported by the first non-3GPP access gateway. For example, the address information of the first non-3GPP access gateway may include one or more of the following: an IP address, a MAC address, an FQDN, an Ethernet address, or a port number. The radio access technology type supported by the first non-3GPP access gateway may include one of the following: an untrusted non-3GPP access technology indication, a trusted non-3GPP access technology indication, an untrusted WLAN access technology indication, or a trusted WLAN access technology indication. For example, when the radio access technology type is a trusted non-3GPP access technology or a trusted WLAN access technology, the first non-3GPP access gateway is a TNGF. When the radio access technology type is an untrusted non-3GPP access technology or an untrusted WLAN access technology, the first non-3GPP access gateway is an N3IWF.

In a possible implementation, the session management network element may alternatively send second indication information to a user plane network element, and the second indication information indicates that the user plane network element performs data transmission by using the first connection and the second connection. During data transmission, the first connection and the second connection are simultaneously maintained. Definitely, for example, after being switched to the second connection in the following, or when data transmission of the first connection is completed, the first connection may also be released, and only the second connection is reserved.

Data transmitted by using the first connection and data transmitted by using the second connection may be the same, or may be different.

If the data transmitted by using the first connection is the same as the data transmitted by using the second connection, the user plane network element may perform deduplication processing on same uplink data simultaneously received by using the first connection and the second connection.

In a possible implementation, the session management network element may further send third indication information to a user plane network element, and the third indication information indicates to switch from the first connection to the second connection, so that the user plane network element determines to switch from the first connection to the second connection. In this way, service continuity is ensured.

In a possible implementation, the session management network element may further receive fourth indication information sent by the user plane network element, and the fourth indication information indicates to release the first connection. In this implementation, the session management information is information used to release the first connection, and an access gateway corresponding to the session management information is the first non-3GPP access gateway. In other words, the session management network element releases the first connection based on the fourth indication information.

In a possible implementation, the session management network element may further receive fifth indication information sent by the first non-3GPP access network element, and the fifth indication information is used to release the first connection. In this implementation, the session management network element releases the first connection based on the fifth indication information.

In a possible implementation, the session management network element may further release the first connection based on the fourth indication information and the fifth indication information.

In a possible implementation, when a session is a multi-access session, the session management network element may allocate, based on a steering function supported by the session, address information different from address information of the first connection to the second connection. The steering function may be a multipath transmission control protocol (multipath transmission control protocol, MPTCP) steering function or a multipath (multipath, MP)-quick user datagram protocol (user datagram protocol, UDP) internet connection (quick UDP internet connection, QUIC) steering function.

According to a second aspect, a communication method is provided, and includes the following process: An access management network element establishes a first connection of user equipment by using a first non-3GPP access gateway. The access management network element receives a first request message, and the first request message is used to request to establish a second connection of the user equipment by using a second non-3GPP access gateway. The access management network element determines to switch from the first connection to the second connection. The access management network element sends a second request message to a session management network element, and the second request message is used to request to establish the second connection of the user equipment by using the second non-3GPP access gateway. The access management network element receives session management information and access gateway information corresponding to the session management information. The access management network element sends the session management information to an access gateway corresponding to the access gateway information.

When the access management network element establishes the first connection of the user equipment by using the first non-3GPP access gateway, the user equipment may initiate a session establishment procedure, to implement establishment of the first connection. In a possible scenario, the user equipment establishes the first connection by using the first non-3GPP access gateway, and accesses the core network. When the non-3GPP access gateway changes due to factors, such as movement of the user equipment or a poor network status, or the non-3GPP access gateway changes due to a change of a non-3GPP access point caused by movement of the user equipment or a poor network status, the access management network element may implement switching from the first connection to the second connection, namely, implement switching from the first non-3GPP access network to the second non-3GPP access gateway.

The access management network element may receive the first request message sent by the second non-3GPP access gateway. For example, the user equipment may send the first request message to the second non-3GPP access gateway, and the second non-3GPP access gateway sends the first request message to the access management network element.

Optionally, an access management gateway may determine, based on the first request message, to switch from the first connection to the second connection. For example, the first request message may include indication information used to request to establish the second connection of the user equipment by using the second non-3GPP access gateway. The access management gateway determines, based on the indication information, to switch from the first connection to the second connection. For another example, the first request message may include session identification information, and the access management gateway may determine, based on a slice of a session identified by the session identification information, to switch from the first connection to the second connection.

The access gateway information is used to determine an access network element. For example, the access gateway information is indication information of a non-3GPP radio access type. The non-3GPP radio access type includes an untrusted non-3GPP access type, a trusted non-3GPP access type, an untrusted WLAN access type, or a trusted WLAN access type.

That the access management network element determines (needs/expects/wants/allows) to switch from the first connection to the second connection may also be understood as that switching from the first non-3GPP access gateway to the second non-3GPP access gateway is determined (needs/is expected/is wanted/is allowed) to be performed.

In the method, the access management network element may establish the second connection and release the first connection, or the access management network element may establish the second connection and simultaneously maintain the first connection and the second connection. The first connection and the second connection that are simultaneously maintained may be used for data transmission. During establishment of the second connection, the access management network element sends the session management information to the second non-3GPP access gateway. During release of the first connection, the access management network element sends the session management information to the first non-3GPP access gateway.

In the method provided in this application, the access management network element determines, based on a request message, to switch from the first connection to the second connection; and sends the session management information by using the corresponding access gateway, to implement switching between non-3GPP access gateways. In this way, service continuity is ensured.

In a possible implementation, when the access management network element determines to switch from the first connection to the second connection, the access management network element determines that the second non-3GPP access gateway supports a slice.

Specifically, before the access management network element sends the second request message to the session management network element, the access management network element determines that the slice supported by the second non-3GPP access gateway includes a slice of the second connection. In other words, in this implementation, when the slice supported by the second non-3GPP access gateway includes the slice of the second connection, the access management network element may determine to switch a session from the first connection to the second connection, and then send the second request message to the session management network element. A second request includes the session identification information, and the session management network element determines, based on the session identification information, to switch the session from the first connection to the second connection.

When the slice supported by the second non-3GPP access gateway does not include the slice of the second connection, the access management network element initiates a release procedure of the session. For example, the access management network element sends a release request message to the session management network element, to release the first connection of the session. The second request includes the session identification information, and the session management network element determines, based on the session identification information, to release the first connection of the session.

That whether the slice supported by the second non-3GPP access gateway includes the slice of the second connection may be that whether information about the slice supported by the second non-3GPP access gateway includes information about the slice of the second connection, or may be that whether a type of the slice supported by the second non-3GPP access gateway includes a type of the slice of the second connection.

In a possible implementation, the second request message includes first indication information, and the first indication information indicates to switch from the first connection to the second connection, and/or the second request message includes an access type of the second connection. For example, the access type of the second connection is the non-3GPP radio access type.

In a possible implementation, the session management information is information used to establish the second connection, and the access gateway information corresponding to the session management information is information about the second non-3GPP access gateway; and/or the session management information is information used to release the first connection, and the access gateway information corresponding to the session management information is information about the first non-3GPP access gateway.

In a possible implementation, the access management network element may further store first identification information of the first connection or the first non-3GPP access gateway, or a type of the first non-3GPP access gateway; and/or store second identification information of the second connection or the second non-3GPP access gateway, or a type of the second non-3GPP access gateway. In this way, the access management network element may distinguish the first connection from the second connection, to determine whether to switch from the first connection to the second connection. The first identification information and the second identification information may be set by the access management network element, or may be set by the session management network element and then sent to the access management network element.

In a possible implementation, when the access management network element sends the session management information to an access gateway corresponding to the access gateway information, the access management network element may determine the first non-3GPP access gateway and the second non-3GPP access gateway based on the first identification information and the second identification information, send, to the first non-3GPP access gateway, information used to release the first connection, and/or send, to the second non-3GPP access gateway, information used to establish the second connection.

In a possible implementation, when the access management network element sends the session management information to the access gateway corresponding to the access gateway information, the access management network element determines a non-3GPP radio access type of the first non-3GPP access gateway and a non-3GPP radio access type of the second non-3GPP access gateway based on the first identification information and the second identification information. The access management network element sends, to the first non-3GPP access gateway based on the non-3GPP radio access type of the first non-3GPP access gateway and the non-3GPP radio access type of the second non-3GPP access gateway, information used to release the first connection, and/or sends, to the second non-3GPP access gateway, information used to establish the second connection.

In this implementation, after the access management network element determines different non-3GPP access types, the access management network element may determine, based on the indication information of the non-3GPP access type that is sent by the session management network element, to send to a non-3GPP access gateway, namely, to send to a non-3GPP access gateway corresponding to the indication information of the non-3GPP access type.

In a possible implementation, when the access management network element sends the session management information to the access gateway corresponding to the access gateway information, the access management network element determines a non-3GPP radio access type of the first non-3GPP access gateway and a non-3GPP radio access type of the second non-3GPP access gateway based on a type of a non-3GPP access gateway (the type of the first non-3GPP access gateway and the type of the second non-3GPP access gateway). The access management network element sends the information used to release the first connection to the first non-3GPP access gateway based on the non-3GPP radio access type of the first non-3GPP access gateway and the non-3GPP radio access type of the second non-3GPP access gateway, and/or sends, to the second non-3GPP access gateway, information used to establish the second connection.

Specifically, when the type of the non-3GPP access gateway is a TNGF, a non-3GPP ratio access type of the non-3GPP access gateway may be the trusted non-3GPP access type or the trusted WLAN access type. When the type of the non-3GPP access gateway is an N3IWF, the non-3GPP radio access type of the non-3GPP access gateway may be the untrusted non-3GPP access type or the untrusted WLAN access type.

According to a third aspect, a communication method is provided, and includes the following process: User equipment establishes a first connection of the user equipment by using a first non-3GPP access gateway. The user equipment determines that switching from a first connection to a second connection needs to be performed. The user equipment selects, based on policy information, a second non-3GPP access gateway corresponding to the second connection. The user equipment establishes the second connection of the user equipment by using a second non-3GPP access gateway.

When the user equipment establishes the first connection of the user equipment by using the first non-3GPP access gateway, the user equipment may initiate a session establishment procedure, to implement establishment of the first connection.

In a possible scenario, the user equipment establishes the first connection by using the first non-3GPP access gateway, and accesses a core network. When the non-3GPP access gateway changes due to factors, such as movement of the user equipment or a poor network status, or the non-3GPP access gateway changes due to a change of a non-3GPP access point caused by movement of the user equipment or a poor network status, the user equipment may determine to switch from the first connection to the second connection, so as to implement switching from the first connection to the second connection, namely, implement switching from the first non-3GPP access network to the second non-3GPP access gateway. That the user equipment determines (needs/expects/wants/allows) to switch from the first connection to the second connection may also be understood as that switching from the first non-3GPP access gateway to the second non-3GPP access gateway is determined (needs/is expected/is wanted/is allowed) to be performed.

The user equipment stores the policy information delivered by the core network, and the policy information is used to select a non-3GPP access gateway.

The user equipment establishes the second connection by using the second non-3GPP access gateway and releases the first connection, or the user equipment establishes the second connection by using the second non-3GPP access gateway and simultaneously maintains the first connection and the second connection. The first connection and the second connection that are simultaneously maintained may be used for data transmission.

In the method provided in this application, the user equipment determines to switch from the first connection to the second connection, and the user equipment selects, based on the policy information, the second non-3GPP access gateway corresponding to the second connection, to implement switching between non-3GPP access gateways. In this way, service continuity is ensured.

In a possible implementation, when the user equipment selects, based on the policy information, the second non-3GPP access gateway corresponding to the second connection, the user equipment may select the second non-3GPP access gateway based on a slice of a session. A slice supported by the second non-3GPP access gateway includes the slice of the session.

In a possible implementation, when the user equipment selects, based on the policy information, the second non-3GPP access gateway corresponding to the second connection, the user equipment selects the second non-3GPP access gateway based on a slice corresponding to the first connection. A slice corresponding to the second connection includes the slice corresponding to the first connection. The slice corresponding to the second connection may be the slice supported by the second non-3GPP access gateway, and the slice corresponding to the first connection may be a slice supported by the first non-3GPP access gateway. Optionally, the slice corresponding to the first connection includes the slice of the session.

In a possible implementation, when the user equipment selects, based on the policy information, the second non-3GPP access gateway corresponding to the second connection, the user equipment may select the second non-3GPP access gateway based on a priority of the slice corresponding to the second connection. For example, the second non-3GPP access gateway supports the priority of the slice corresponding to the second connection.

In a possible implementation, when the user equipment selects, based on the policy information, the second non-3GPP access gateway corresponding to the second connection, the user equipment may select the second non-3GPP access gateway based on a slice priority. For example, the user equipment selects, based on the slice priority, a second non-3GPP access gateway that supports a first-priority slice. If the first-priority slice cannot be selected or is not supported, the user equipment selects a second non-3GPP access gateway that supports a second-priority slice. If the second-priority slice cannot be selected or is not supported, the user equipment continues to select a second non-3GPP access gateway that supports a third-priority slice until the second non-3GPP access gateway is selected. Optionally, the first priority is higher than the second priority, and the second priority is higher than the third priority.

In a possible implementation, when the user equipment establishes the second connection of the user equipment by using the second non-3GPP access gateway, the user equipment may send a request message to the second non-3GPP access gateway. The request message is used to request to establish the second connection of the user equipment by using the second non-3GPP access gateway.

In a possible implementation, the user equipment may further receive information that is sent by the first non-3GPP access gateway and that is used to release the first connection, and the user equipment releases the first connection. During establishment of the second connection in this implementation, a network side may initiate a release procedure of the first connection.

In a possible implementation, the user equipment may further perform data transmission by using the first connection and the second connection. Data transmitted by using the first connection and data transmitted by using the second connection may be the same, or may be different. During data transmission, the first connection and the second connection are simultaneously maintained. Definitely, for example, after being switched to the second connection in the following, or when data transmission of the first connection is completed, the first connection may also be released, and only the second connection is reserved.

If the data transmitted by using the first connection is the same as the data transmitted by using the second connection, a user may perform deduplication processing on same downlink data simultaneously received by using the first connection and the second connection.

In a possible implementation, when data transmission of the first connection is completed, the user equipment may alternatively send a connection release request message to the first non-3GPP access gateway. In this implementation, the user equipment may initiate the release procedure of the first connection. Optionally, the connection release request message includes indication information, and the indication information indicates the first non-3GPP access gateway to send an end data packet to a user plane network element.

In a possible implementation, the user equipment may further receive first address information, and the first address information corresponds to the first connection; and/or receive second address information, and the second address information corresponds to the second connection. The first address information and the second address information may be used to distinguish the first connection from the second connection, or may be used to distinguish the first non-3GPP access gateway from the second non-3GPP access gateway. The first address information may be allocated by the network side (for example, a session management network element or the user plane network element) to the first connection, and the second address information may be allocated by the network side to the second connection.

In a possible implementation, the user equipment may encapsulate a data packet based on the second address information, and then the user equipment sends the data packet by using the second connection corresponding to the second address information.

According to a fourth aspect, a communication method is provided, and includes the following process: A user plane network element establishes a first connection of user equipment by using a first non-3GPP access gateway. The user plane network element receives third indication information, and the third indication information indicates to switch from a first connection to a second connection. The user plane network element determines, based on the third indication information, to switch from the first connection to the second connection. The user plane network element performs data transmission by using the second connection.

Optionally, a session management network element sends the third indication information to the user plane network element.

In the method provided in this application, a user plane gateway determines, based on the indication information, to switch from the first connection to the second connection, and then performs data transmission by using the second connection, to implement switching of a service flow between non-3GPP access gateways. In this way, service continuity is ensured.

In a possible implementation, the user plane network element may further receive second indication information, and the second indication information indicates that the user plane network element performs data transmission by using the first connection and the second connection.

When the user plane network element performs data transmission by using the second connection, the user plane network element may perform data transmission by using the first connection and the second connection. During data transmission, the first connection and the second connection are simultaneously maintained. Definitely, for example, after being switched to the second connection in the following, or when data transmission of the first connection is completed, the first connection may also be released, and only the second connection is reserved.

Optionally, the session management network element sends the second indication information to the user plane network element.

Data transmitted by using the first connection and data transmitted by using the second connection may be the same, or may be different.

If the data transmitted by using the first connection is the same as the data transmitted by using the second connection, the user plane network element may perform deduplication processing on same uplink data simultaneously received by using the first connection and the second connection.

In a possible implementation, the user plane network element may further receive an end data packet. For example, the user equipment may send a connection release request message to the first non-3GPP access gateway, and the first non-3GPP access gateway sends the end data packet to the user plane network element based on the connection release request message.

The user plane network element sends fourth indication information to a session management network element based on the end data packet. The session management network element releases the first connection based on the fourth indication information.

In a possible implementation, the user plane network element allocates, based on a steering function supported by a session, address information different from address information of the first connection to the second connection. The user plane network element sends, to the session management network element, the address information allocated to the second connection. The steering function may be an MPTCP steering function or an MP-QUIC steering function.

According to a fifth aspect, a communication method is provided, and includes the following process: A first non-3GPP access gateway receives a connection release request message. The first non-3GPP access gateway sends an end data packet to a user plane network element.

Optionally, the connection release request message includes indication information, and the indication information indicates the first non-3GPP access gateway to send the end data packet to the user plane network element. When the first non-3GPP access gateway sends the end data packet to the user plane network element, the first non-3GPP access gateway sends the end data packet to the user plane network element based on the indication information.

When data transmission is performed by using the first connection, the first non-3GPP access gateway may send uplink data and/or downlink data.

According to a sixth aspect, a communication apparatus is provided. The communication apparatus may be a session management network element, an access management network element, user equipment, a user plane network element, a non-3GPP access gateway, or a chip set in a session management network element, an access management network element, user equipment, a user plane network element, or a non-3GPP access gateway. The communication apparatus may implement the method provided in any one of the foregoing aspects.

The communication apparatus includes a corresponding module, unit, or means (means) for implementing the method. The module, unit, or means may be implemented by hardware, by software, or by hardware executing corresponding software. The hardware or the software includes one or more modules or units corresponding to the foregoing functions.

According to a seventh aspect, a communication apparatus is provided, and includes a transceiver unit. Optionally, the communication apparatus further includes a processing unit. The communication apparatus may implement the method provided in any one of the foregoing aspects or any implementation of any one of the foregoing aspects.

According to an eighth aspect, a communication apparatus is provided, and includes a processor. The processor may be configured to perform the method provided in any one of the foregoing aspects or any implementation of any one of the foregoing aspects. Optionally, the apparatus further includes a memory. The processor is coupled to the memory. The memory is configured to store a computer program or instructions. The processor may execute the program or the instructions in the memory, so that the apparatus may perform the method provided in any one of the foregoing aspects or any implementation of any one of the foregoing aspects.

According to a ninth aspect, a communication apparatus is provided. The apparatus includes an interface circuit and a logic circuit. The logic circuit is coupled to the interface circuit. The interface circuit may be a code/data read and write interface circuit, and the interface circuit is configured to receive computer-executable instructions (where the computer-executable instructions are stored in a memory, and may be directly read from the memory or may be read through another component) and transmit the computer-executable instructions to the logic circuit, so that the logic circuit runs the computer-executable instructions to perform the method provided in any one of the foregoing aspects or any implementation of any one of the foregoing aspects.

In some possible designs, the communication apparatus may be a chip or a chip system.

According to a tenth aspect, a communication apparatus is provided, and includes a processor and a memory. The processor is configured to: read instructions stored in the memory, may receive a signal through a receiver, and transmit a signal through a transmitter, to perform the method provided in any one of the foregoing aspects or any implementation of any one of the foregoing aspects.

Optionally, there may be one or more processors, and there may alternatively be one or more memories. Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be disposed on different chips. A type of the memory and a manner of disposing the memory and the processor are not limited in this application.

The communication apparatus may be a chip, and the processor may be implemented by hardware, or may be implemented by software. When implemented by the hardware, the processor may be a logic circuit, an integrated circuit, or the like. When implemented by the software, the processor may be a general-purpose processor, and is implemented by reading software code stored in the memory. The memory may be integrated into the processor, or may exist independently outside the processor.

According to an eleventh aspect, a processor is provided, and includes an input circuit, an output circuit, and a processing circuit. The processing circuit is configured to receive a signal through the input circuit and transmit a signal through the output circuit, so that the processor performs the method provided in any one of the foregoing aspects or any implementation of any one of the foregoing aspects.

During a specific implementation process, the processor may be a chip, the input circuit may be an input pin, the output circuit may be an output pin, and the processing circuit may be a transistor, a gate circuit, a flip-flop, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a twelfth aspect, a communication apparatus is provided, and includes a logic circuit and an input/output interface. The input/output interface is configured to communicate with a module other than the communication apparatus. The logic circuit is configured to run a computer program or instructions, to perform the method provided in any design of any one of the foregoing aspects. The communication apparatus may be a session management network element or an access management network element or user equipment or a user plane network element or a non-3GPP access gateway in any one of the foregoing aspects, or an apparatus including the session management network element or the access management network element or user equipment or the user plane network element or the non-3GPP access gateway, or an apparatus included in the session management network element or the access management network element or user equipment or the user plane network element or the non-3 GPP access gateway, for example, a chip.

Alternatively, the input/output interface may be a code/data read/write interface circuit or a communication interface, and the input/output interface is configured to receive a computer program or instructions (the computer program or the instructions is/are stored in a memory, and may be directly read from the memory, or through another component), and transmit the computer program or the instructions to the input/output interface, so that the input/output interface runs the computer program or the instructions to perform the method in any one of the foregoing aspects.

Optionally, the communication apparatus may be a chip.

According to a thirteenth aspect, a computer program product is provided. The computer program product includes a computer program (which may also be referred to as code or instructions). When the computer program is run, a computer is enabled to perform the method provided in any one of the foregoing aspects or any implementation of any one of the foregoing aspects.

According to a fourteenth aspect, a computer-readable medium is provided. The computer-readable medium stores a computer program (which may also be referred to as code or instructions). When the computer program is run on a computer, the computer is enabled to perform the method provided in any one of the foregoing aspects or any implementation of any one of the foregoing aspects.

According to a fifteenth aspect, a chip system is provided. The chip system includes a processor and an interface, configured to support a communication apparatus in implementing a function provided in any one of the foregoing aspects or any implementation of any one of the foregoing aspects. In a possible design, the chip system further includes a memory. The memory is configured to store information and data that are necessary for the foregoing communication apparatus. The chip system may include a chip, or may include a chip and another discrete device.

According to a sixteenth aspect, a chip apparatus is provided. The chip apparatus includes an input interface and/or an output interface. The input interface may implement a reception function provided in any one of the foregoing aspects or any implementation of any one of the foregoing aspects, and the output interface may implement a sending function provided in any one of the foregoing aspects or any implementation of any one of the foregoing aspects.

According to a seventeenth aspect, a functional entity is provided. The functional entity is configured to implement the method provided in any one of the foregoing aspects or any implementation of any one of the foregoing aspects.

According to an eighteenth aspect, a communication system is provided, and includes the session management network element in the first aspect and the access management network element in the second aspect.

Optionally, the communication system further includes user equipment in the third aspect.

Optionally, the communication system further includes the user plane network element in the fourth aspect.

Optionally, the communication system further includes the first non-3GPP access gateway in the fifth aspect and a second non-3GPP access gateway.

For technical effect brought by any implementation of the sixth aspect to the eighteenth aspect, refer to technical effect brought by the first aspect to the fifth aspect. Details are not described herein again.

### BRIEF DESCRIPTION OF DRAWINGS

FIG. 1 is a schematic diagram of an architecture of a communication system;
FIG. 2 is a schematic diagram of an architecture of a communication system;
FIG. 3 is a schematic diagram of session access;
FIG. 4 is a schematic diagram of a multi-access architecture;
FIG. 5 is a schematic diagram of a communication process according to an embodiment of this application;
FIG. 6 is a schematic diagram of a communication process according to an embodiment of this application;
FIG. 7 is a schematic diagram of a communication process according to an embodiment of this application;
FIG. 8A, FIG. 8B, and FIG. 8C are schematic diagrams of a communication process according to an embodiment of this application;
FIG. 9A, FIG. 9B, and FIG. 9C are schematic diagrams of a communication process according to an embodiment of this application;
FIG. 10 is a schematic diagram of a structure of a communication apparatus according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment.

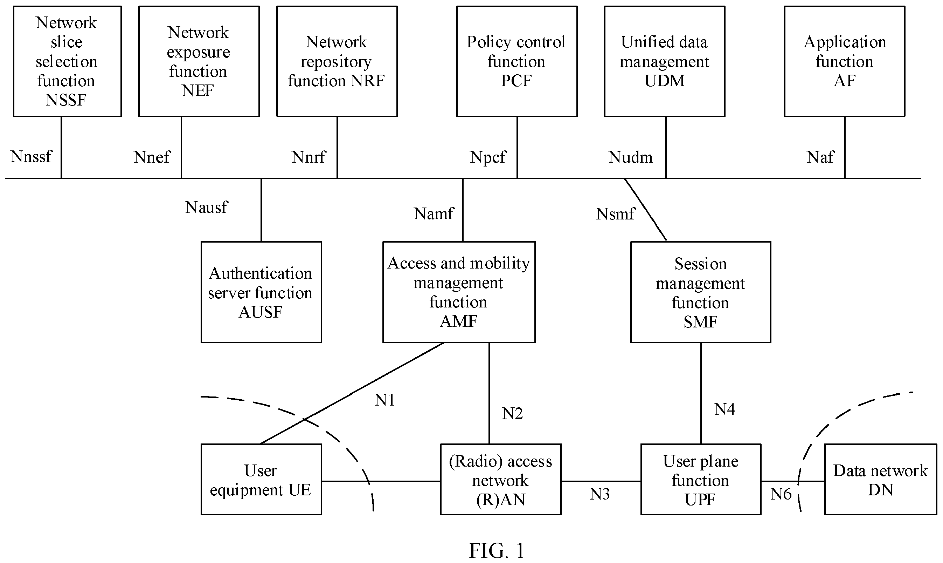

FIG. 1 is a schematic diagram of a 5G network architecture based on a service-oriented architecture. The 5G network architecture shown in FIG. 1 may include three parts: a terminal device, a data network (data network, DN), and a carrier network. The following briefly describes functions of some network elements.

The carrier network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an access and mobility management function (access and mobility management function, AMF) network element, a session management function (session management function, SMF) network element, a radio access network (radioaccess network, RAN), a user plane function (user plane function, UPF) network element, and the like. In the foregoing carrier network, a part other than the radio access network may be referred to as a core network part. In a possible implementation, the carrier network further includes an application function (Application Function, AF) network element. Alternatively, the AF may belong to a third party instead of the carrier network.

A terminal device (terminal device) is a device having a wireless transceiver function. The terminal device may be deployed on land, and include an indoor device, an outdoor device, a handheld device, or a vehicle-mounted device; may be deployed on water (for example, on a ship); or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The terminal device may establish a connection to the carrier network through an interface (for example, N1) provided by the carrier network, and use services such as data and/or voice provided by the carrier network. The terminal device may further access a DN through the carrier network, and use a carrier service deployed on the DN and/or a service provided by the third party. The third party may be a service provider other than the carrier network and the terminal device, and may provide services such as a data service and/or a voice service for the terminal device. A specific representation form of the third party may be specifically determined based on an actual application scenario, and is not limited herein.

The RAN is a subnet of the carrier network, and is an implementation system between a service node in the carrier network and the terminal device. To access the carrier network, the terminal device first passes through the RAN, and may be connected to the service node in the carrier network through the RAN. A RAN device is a device that provides a wireless communication function for the terminal device, and the RAN device is also referred to as an access network device. The RAN device includes but is not limited to: a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseBand unit, BBU), a transmission reception point (transmission reception point, TRP), a transmission point (transmission point, TP), a mobile switching center, and the like in 5G.

The core network part includes the user plane function and a control plane function.

The user plane function includes a UPF network element. The UPF network element serves as an interface connecting to the data network, implements functions such as user plane data (for example, a grouped data packet) forwarding, quality of service (quality of service, QoS) control, charging statistics based on a session/flow level, and bandwidth throttling.

The control plane function is mainly responsible for user registration and authentication, mobility management, delivery of a data packet forwarding policy and a QoS control policy to the user plane function, and the like. The control plane function may further specifically include another network element other than the UPF network element, for example, an AMF network element or an SMF network element.

The AMF network element mainly performs a registration procedure during user access, and functions such as location management during movement of a user and access authentication/authorization. In addition, the AMF network element is responsible for transferring a user policy between the UE and the PCF.

The SMF network element mainly performs establishment of a corresponding session connection when the user initiates a service, and provides a specific service, for example, a function of delivering, to the UPF, a data packet forwarding policy and a QoS control policy based on an NG4 interface between the SMF and the UPF, for the user.

The AUSF network element is mainly responsible for authenticating the user, and determining validity of the user equipment, to determine whether the user or a device is allowed to access a network.

The UDM network element is mainly responsible for functions such as storing subscription data of the user equipment and user access authorization.

The UDR is mainly responsible for a function of accessing subscription data, policy data, application data, and another type of data.

The PCF network element is mainly responsible for delivering service-related policies to the AMF or the SMF.

The NEF network element is mainly configured to support capability and event exposure.

The AF network element mainly transmits a requirement of an application side for a network side to the PCF, so that the PCF generates a corresponding policy. The AF may be a third-party functional entity, or may be an operator-deployed application service, for example, an IP multimedia subsystem (IP Multimedia Subsystem, IMS) voice call service.

The NRF network element may be configured to provide a network element discovery function, and provide, based on a request from another network element, network element information corresponding to a network element type. The NRF further provides a network element management service, for example, registration, update, and deregistration of a network element and subscription and push of a network element status.

A DN is a network outside the carrier network. The carrier network may access a plurality of DNs. A plurality of services may be deployed in the DN, and the DN may provide services such as a data service and/or a voice service for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Nausf, Nnef, Npcf, Nudm, Naf, Namf, Nsmf, N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

The 5G network architecture supports access to the core network (core network, CN) by using a radio access technology (radio access technology, RAT) defined by the 3GPP. The RAT defined by the 3GPP includes long term evolution (long term evolution, LTE), 5G RAN, and the like. The 5G network architecture further supports access to the core network by using a non-3GPP (non-3GPP, N3G) access technology via a non-3GPP interworking function (non-3GPP interworking function, N3IWF) or a next generation packet data gateway (next generation packet data gateway, ngPDG).

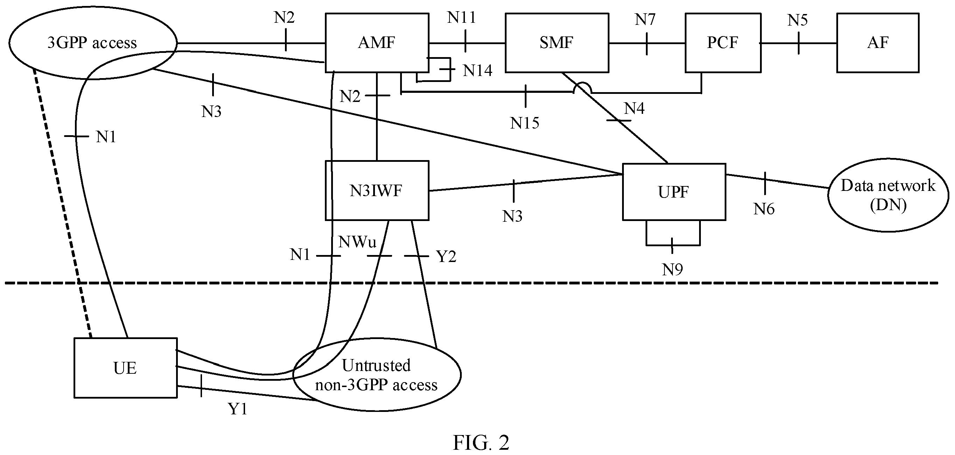

When a 5G core network (5G core, 5GC) supports non-3GPP access, a 5G network architecture is shown in FIG. 2. An access network includes a 3GPP access network and a non-3GPP access network. An access device in the 3GPP access network may be referred to as a radio access network (radio access network, RAN) device. The N3IWF is a non-3GPP access gateway. The non-3GPP access network may include, for example, an untrusted wireless local area network (wireless local area network, WLAN) access network, and an N3IWF device may include, for example, a router.

It should be noted that the 5G core network further supports trusted non-3GPP access and/or wired network access. A trusted non-3GPP access network may include, for example, a trusted WLAN network. A wired network may include, for example, fixed home network access (a fixed network for short below). When the 5G core network supports trusted non-3GPP access, a 5G network architecture of the 5G core network is similar to the 5G network architecture in FIG. 2. Untrusted non-3GPP access in FIG. 2 may be replaced with trusted non-3GPP access, and the N3IWF may be replaced with a trusted non-3GPP access gateway (trusted non-3GPP gateway function, TNGF). When the 5G core network supports wired network access, a 5G network architecture of the 5G core network is similar to the 5G network architecture in FIG. 2. The untrusted non-3GPP access in FIG. 2 may be replaced with wired network access, and the N3IWF may be replaced with a wired network access gateway function (wireline access gateway function, W-AGF). An access network device between UE and an access gateway may include a WLAN access point (access point, AP), a fixed access network (fixed access network, FAN) device, a switch, a router, and the like.

It can be learned that a non-3GPP access technology includes an access technology, for example, trusted WLAN access, untrusted WLAN access, or wired network access. Regardless of trusted non-3GPP access or untrusted non-3GPP access, the core network may use the 3GPP access core network architecture and the service interface shown in FIG. 1, or may use the network architecture and a point-to-point interface protocol shown in FIG. 2.

It may be understood that the foregoing network elements or functions may be network elements in a hardware device, software functions running on dedicated hardware, or virtualized functions instantiated on a platform (for example, a cloud platform). Optionally, the foregoing network elements or the functions may be implemented by one device, or may be jointly implemented by a plurality of devices, or may be one functional module in one device. This is not specifically limited in this embodiment of this application.

A mobility management network element, a session management network element, a policy control network element, an access network device, and a user plane network element in this application may be respectively the AMF, the SMF, the PCF, the RAN, and the UPF in FIG. 1 or FIG. 2, or may be network elements that have functions of the AMF, the SMF, the PCF, the RAN, and the UPF in a future communication network, for example, a 6th generation (6th generation, 6G) network. This is not limited in this application. For ease of description, in this application, descriptions are provided by using an example in which the mobility management network element, the session management network element, the policy control network element, the access network device, and the user plane network element are respectively the AMF, the SMF, the PCF, the RAN, and the UPF. Further, in this application, an example in which the terminal device is UE is used for description.

To facilitate understanding of solutions in embodiments of this application, the following first explains and describes some terms or nouns in embodiments of this application.

### 1. Session, including a multi-access PDU session and a single-access PDU session

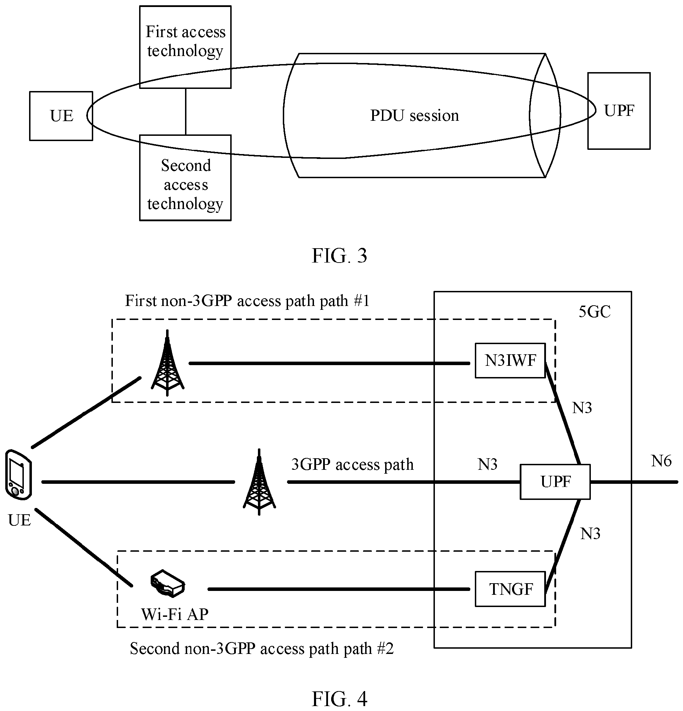

The multi-access PDU (Multi-access PDU, MAPDU) session (session) is a PDU session that supports a plurality of access technologies. FIG. 3 is a schematic diagram of a relationship between a PDU session and access technologies. Refer to FIG. 3. The PDU session may be accessed by using a first access technology, or may be accessed by using a second access technology. In this scenario, the PDU session may be referred to as an MAPDU session. One MAPDU session is identified by one MAPDU session identifier (MAPDU session ID).

The first access technology is different from the second access technology, or the first access technology and the second access technology are same access technologies but are separately used by different access network devices. The first access technology and the second access technology may alternatively be but are not limited to any two of the following access types: 3GPP access, non-3GPP access, LTE access, 5GRAN access, trusted non-3GPP access, untrusted non-3GPP access, WLAN access, trusted WLAN access, untrusted WLAN access, wired network access (fixed network access), trusted Wi-Fi access, untrusted Wi-Fi access, or the like.

The MAPDU session can implement movement and concurrency of service flows between different access technologies. For example, the service flow is transmitted by using the first access technology, and the service flow is subsequently transmitted by using the second access technology. Alternatively, a service data packet of the service flow is transmitted by simultaneously using the first access technology and the second access technology, to increase bandwidth.

A single PDU session is a PDU session that supports a single access technology. One PDU session includes one or more QoS flows. One PDU session is identified by one PDU session identifier (PDU session ID).

### 2. Service flow

In embodiments of this application, a service flow includes a service data flow (service data flow, SDF), an IP data flow, an Ethernet data flow (or an Ethernet flow), or at least one QoS flow.

One QoS flow includes one or more SDFs.

One SDF includes one or more IP flows, or includes one or more Ethernet flows. IP data packets or Ethernet data packets in one SDF correspond to same service data flow description information.

One IP flow includes one or more IP data packets, and the IP data packets in the IP flow have same IP 5-tuple information. The IP 5-tuple information includes at least one of a source IP address, a destination IP address, a source port number, a destination port number, or a protocol number.

One Ethernet flow includes one or more Ethernet data packets, and the Ethernet data packets in the Ethernet flow have same Ethernet flow description information. The Ethernet flow description information includes at least one of a source MAC address or a destination MAC address.

In embodiments of this application, the service data packet includes the IP data packet, the Ethernet data packet, or the like.

### 3. Steering mode (steering mode) of a service data flow (SDF)

The steering mode of the service data flow indicates how the service data flow selects a route, moves, or is split in data transmission channels of two access technologies. The steering mode of the service data flow includes but is not limited to: an active-standby (active-standby) mode, a smallest delay (smallest delay) mode, a load-balancing (load-balancing) mode, or a priority-based mode.

### 4. Steering function (steering function) of a service data flow (SDF), indicating a function of executing service flow steering

### 5. Wireless access technology, which is an access technology that connects a user terminal and a network node by using a wireless medium to implement information transmission between a user and a network

It can be learned that access technologies include 3GPP access, non-3GPP access, LTE access, 5G NR access, trusted WLAN access, untrusted WLAN access, wired network access, and the like. LTE and 5G NR are 3GPP access technologies, and WLAN access and wired network access are non-3GPP access technologies.

6. Term "and/or" in this application, which describes an association relationship between associated objects and represents that three relationships may exist. For example, A and/or B may represent the following three cases: Only A exists, both A and B exist, and only B exists. The character "/" generally indicates an "or" relationship between the associated objects.

"A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence.

To implement switching between non-3GPP access gateways, embodiments of this application provide a communication method.

It should be noted that embodiments of this application are applicable to a mobile communication system, for example, a 4th generation (4th generation, 4G) communication system (for example, an LTE system) or a 5G communication system (for example, a new radio (new radio, NR) system), and a future mobile communication system, for example, 6G. The mobile communication system supports a plurality of access technologies. For example, a 5GC network supports the plurality of access technologies, or a 5GC and evolved packet core (evolved packet core, EPC) convergence network supports the plurality of access technologies. A network architecture and a service scenario described in embodiments of this application are intended to describe technical solutions in embodiments of this application more clearly, and do not constitute a limitation on the technical solutions provided in embodiments of this application. Persons of ordinary skill in the art may know that with evolution of the network architecture and emergence of a new service scenario, the technical solutions provided in embodiments of this application are also applicable to similar technical problems.

FIG. 4 is a schematic diagram of a multi-access architecture to which an embodiment of this application is applicable. In the multi-access architecture, UE may implement switching between non-3GPP access gateways. The multi-access architecture includes a 3GPP access path, a first non-3GPP access path (path #1), and a second non-3GPP access path (path #2).

In the 3GPP access path, a base station serves as an access device to support a 3GPP access technology. The UE may access 5GC by using the 3GPP access technology, and the base station communicates with a UPF in the 5GC through an N3 interface.

In the first non-3GPP access path (path #1), an untrusted wireless fidelity (wireless fidelity, Wi-Fi) AP serves as an access device to support a non-3GPP access technology, the UE may access the 5GC by using the non-3GPP access technology, and the AP communicates with the UPF in the 5GC by using a non-3GPP access gateway N3IWF.

In the second non-3GPP access path (path #2), a trusted Wi-Fi AP serves as an access device to support the non-3GPP access technology, the UE may access the 5GC by using the non-3GPP access technology, and the Wi-Fi AP communicates with the UPF in the 5GC by using a non-3GPP access gateway TNGF.

When the UE is switched from the N3IWF to the TNGF, the path #1 is a source non-3GPP path, the N3IWF is a source non-3GPP access gateway, the untrusted Wi-Fi AP is a source non-3GPP access point, the path #2 is a target non-3GPP path, the TNGF is a target non-3GPP access gateway, and the trusted Wi-Fi AP is a target non-3GPP access point. When the UE is switched from the TNGF to the N3IWF, the path #2 is a source non-3GPP path, the TNGF is a source non-3GPP access gateway, the trusted Wi-Fi AP is a source non-3GPP access point, the path #1 is a target non-3GPP path, the N3IWF is a target non-3GPP access gateway, and the untrusted Wi-Fi AP is a target non-3GPP access point.

It should be noted that the path #1 and the path #2 may use a same access technology, but are connected to different non-3GPP access gateways by using different non-3GPP access devices. For example, the UE is switched from one N3IWF to another N3IWF, or the UE is switched from one TNGF to another TNGF.

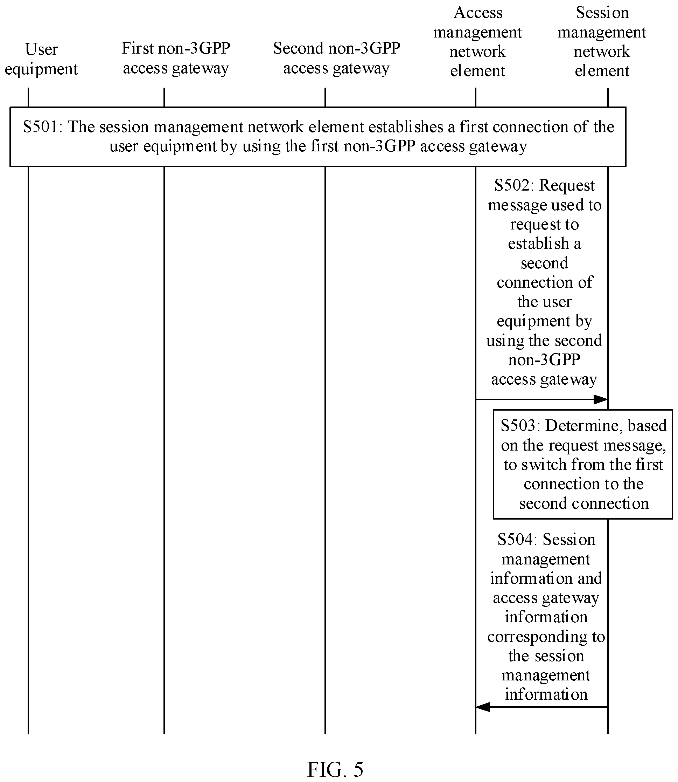

FIG. 5 is a schematic diagram of a communication method according to an embodiment of this application. The method includes the following steps.

S501: A session management network element establishes a first connection of user equipment by using a first non-3GPP access gateway.

S502: The session management network element receives a request message, where the request message is used to request to establish a second connection of the user equipment by using a second non-3GPP access gateway.

S503: The session management network element determines, based on the request message, to switch from the first connection to the second connection.

S504: The session management network element sends, to an access management network element, session management information and access gateway information corresponding to the session management information.

Based on the solution, the session management network element may initiate switching from the first connection to the second connection based on the request message, to implement switching between non-3GPP access gateways. In this way, service continuity is ensured.

The non-3GPP access gateway is an access gateway of a non-3GPP access technology. The user equipment establishes connections by using the non-3GPP access gateways, and accesses a network (which is referred to as a non-3GPP network below) of the non-3GPP access technology. Generally, the user equipment establishes the connection to the non-3GPP access gateway by using a non-3GPP access point. In some cases, when the non-3GPP access point changes, the non-3GPP access gateway may also change, so that a service flow of the user equipment is switched from one non-3GPP access gateway to another non-3GPP access gateway.

In an implementation, the first connection and the second connection may be non-3GPP access technologies of a same access type, or may be non-3GPP access technologies of different access types. For example, non-3GPP access is trusted non-3GPP access or wired network access, and the non-3GPP access gateway may be a TNGF. For another example, non-3GPP access is untrusted non-3GPP access or wired network access, and the non-3GPP access gateway may be an N3IWF.

The first connection corresponds to the first non-3GPP access gateway. Specifically, the first connection may be a non-3GPP path established by using the first non-3GPP access gateway, or the first connection may be a non-3GPP path used before a session of the user equipment is switched. The second connection corresponds to the second non-3GPP access gateway. Specifically, the second connection may be a non-3GPP path established by using the second non-3GPP access gateway, or the second connection may be a non-3GPP path used after the session of the user equipment is switched. The "session" in embodiments of this application may be a multi-access (multi-access, MA) session or a single-access session. More specifically, the "session" may be a multi-access protocol data unit (protocol data unit, PDU) session or a single-access PDU session. For example, the first connection may be a PDU session, or may be one connection in the MAPDU session, and the second connection may be a PDU session, or may be another connection in the MA PDU session.

In an implementation, in S501, another device in the non-3GPP network may also establish the first connection of the user equipment by using the first non-3GPP access gateway. For example, the access management network element establishes the first connection of the user equipment by using the first non-3GPP access gateway. For another example, the user equipment establishes the first connection of the user equipment by using the first non-3GPP access gateway. In an example, that the user equipment initiates a session establishment procedure may be specifically as follows: The user equipment sends a session establishment message to the first non-3GPP access gateway, and the first non-3GPP access gateway sends the session establishment message to the access management network element. In an implementation, the session establishment message is a PDU session establishment (PDU session establishment) message, and the PDU session establishment message includes MAPDU session request indication information, which indicates that the PDU session is the MAPDU session.

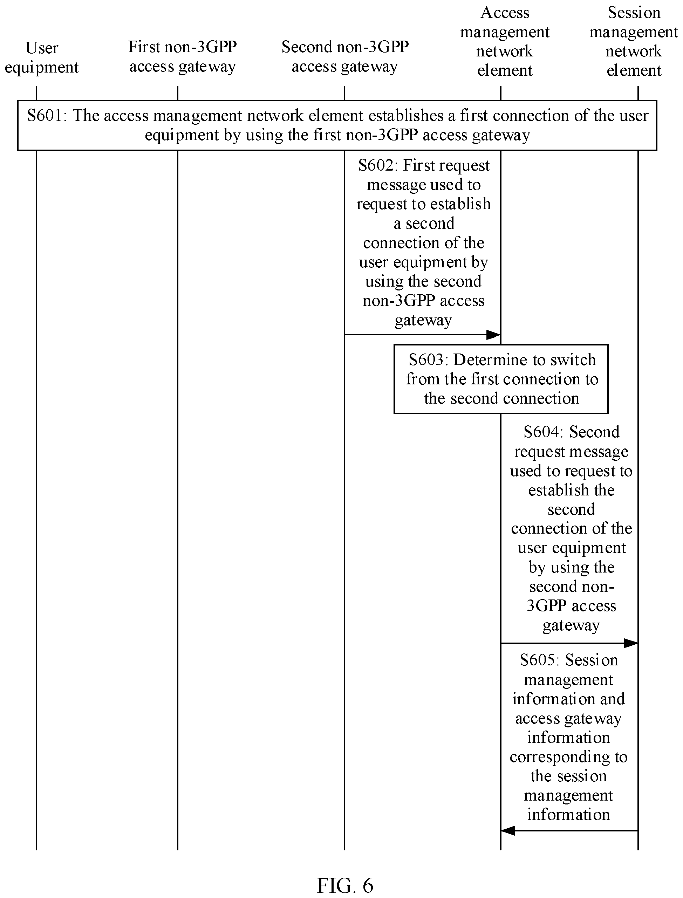

In S502, the session management network element may receive the request message sent by the access management network element. In an example, the access management network element receives the request message. The request message is used to request to establish the second connection of the user equipment by using the second non-3GPP access gateway. The access management network element sends the request message to a session management gateway. For ease of differentiation, the request message received by the access management network element is referred to as a first request message, and the request message received by the session management network element is referred to as a second request message. The following describes a possible procedure of the example with reference to FIG. 6. The following steps are included.

S601: An access management network element establishes a first connection of user equipment by using a first non-3GPP access gateway.

S602: The access management network element receives a first request message, and the first request message is used to request to establish a second connection of the user equipment by using a second non-3GPP access gateway.

S603: The access management network element determines to switch from the first connection to the second connection.

S604: The access management network element sends a second request message to a session management network element, and the second request message is used to request to establish the second connection of the user equipment by using the second non-3GPP access gateway.

S604 corresponds to S502, that is, in S502, the session management network element receives the second request message.

S605: The access management network element receives session management information and access gateway information corresponding to the session management information.

S605 corresponds to S504, that is, in S504, the session management network element sends, to the access management network element, the session management information and the access gateway information corresponding to the session management information.

In an implementation, the request message (namely, the second request message) includes but is not limited to one or more of the following information: first indication information, and an access type of the second connection or session identification information. The first indication information indicates to switch from the first connection to the second connection. The session identification information indicates a session to be switched. S503 may be specifically: The session management network element determines, based on the first indication message, to switch from the first connection to the second connection, and/or the session management network element determines, based on an access type of the first connection and the access type of the second connection, to switch from the first connection to the second connection, and/or the session management network element determines, based on the session identification information, to switch a session identified by the session identification information from the first connection to the second connection. The access type of the first connection may be carried in a corresponding request message when the first connection is established by using the first non-3GPP access gateway. In an example, the session management network element may determine, based on the first indication information and the session identification information, to switch the session from the first connection to the second connection. In another example, when the access type of the first connection is different from the access type of the second connection, the session management network element may determine, based on the access type of the first connection and the access type of the second connection, to switch from the first connection to the second connection. Specifically, the session management network element may determine, based on a difference between the access type of the first connection and the access type of the second connection, to switch from the first connection to the second connection.

If the session management network element obtains the access type of the second connection, the session management network element may send the access type of the second connection to a policy control network element. The access type of the second connection is used (by the policy control network element) to determine a steering policy. The policy control network element may update the steering policy based on the access type of the second connection, or keep a current steering policy unchanged. For example, when untrusted non-3GPP access (namely, the access type of the first connection is untrusted non-3GPP access) is switched to trusted non-3GPP access (namely, the access type of the second connection is trusted non-3GPP access), the policy control network element may determine that the steering policy is a preferred cellular link or the like.

In a possible implementation (referred to as Manner 1 below), a network side may establish the second connection and delete the first connection. For example, the session management information is information used to establish the second connection, and the access gateway information corresponding to the session management information may be information about the second non-3GPP access gateway. An access gateway corresponding to the session management information is the second non-3GPP access gateway. In this way, the session management network element may implement establishment of the second connection of the user equipment. For another example, the session management information may be information used to release the first connection, and the access gateway information corresponding to the session management information is information about the first non-3GPP access gateway. An access gateway corresponding to the session management information is the first non-3GPP access gateway. In this way, the session management network element may implement release of the first connection of the user equipment.

The session management information may be N2 session management (session management, SM) information. It may be understood that the N2 SM information is merely an example. A form of the session management information is not limited in this embodiment of this application.

In another possible implementation (referred to as Manner 2 below), a network side may simultaneously maintain the first connection and the second connection. For example, the session management information is information used to establish the second connection. An access gateway corresponding to the session management information may be the second non-3GPP access gateway. In this way, the session management network element may implement establishment of the second connection of the user equipment, and does not release the first connection, to simultaneously maintain the first connection and the second connection.

In Manner 2, the network side may use two connections to perform data transmission, for example, the session management network element may send second indication information to a user plane network element, and the second indication information indicates that the user plane network element uses the first connection and the second connection to perform data transmission. The user plane network element may perform, with the user equipment based on the second indication information, data transmission by using the first connection and the second connection. Data transmitted by using the first connection and data transmitted by using the second connection may be the same, or may be different.

In Manner 1 and Manner 2, the session management network element may alternatively send third indication information to the user plane network element, and the third indication information indicates to switch from the first connection to the second connection. The user plane network element determines, based on the third indication information, to switch from the first connection to the second connection, and then performs data transmission by using the second connection.

In some cases (for example, when data transmission is completed, when the second connection is established, or when the first connection is switched to the second connection), the network side may initiate a release procedure of the first connection, to release the first connection, or the user equipment may initiate a release procedure of the first connection to release the first connection. For example, the session management network element may receive fourth indication information sent by a user plane. The fourth indication information indicates to release the first connection. In this case, the session management information is used to release the first connection, and the access gateway corresponding to the session management information is the first non-3GPP access gateway, that is, the session management network element releases the first connection based on the fourth indication information. For another example, the session management network element may receive fifth indication information sent by the first non-3GPP access gateway. The fifth indication information is used to release the first connection, and a session management gateway releases the first connection based on the fifth indication information. For another example, the session management network element releases the first connection based on the fourth indication information and the fifth indication information.

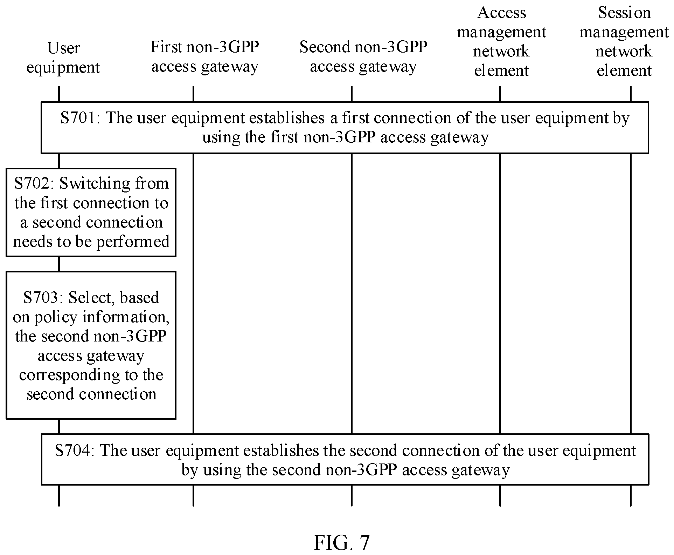

In S602, the access management network element may receive the first request message sent by the second non-3GPP access gateway. In an example, the user equipment sends the first request message to the access management network element by using the second non-3GPP access gateway. Specifically, the user equipment sends the first request message to the second non-3GPP access gateway, and the second non-3GPP access gateway sends the first request message to the access management network element. The following describes a possible communication procedure in this example with reference to FIG. 7. The following steps are included.

S701: User equipment establishes a first connection of the user equipment by using a first non-3GPP access gateway.

S702: The user equipment determines that switching from the first connection to a second connection needs to be performed.

S703: The user equipment selects, based on policy information, a second non-3GPP access gateway corresponding to the second connection.

S704: The user equipment establishes the second connection of the user equipment by using the second non-3GPP access gateway.

Optionally, a first request message may carry user identification information. Specifically, the first request message carries a NAS message, and the NAS message carries the user identification information.

In an implementation, in S603, the access management network element determines that the second non-3GPP access gateway supports a slice. Specifically, when the slice supported by the second non-3GPP access gateway includes a slice of the second connection, it may be determined that the second non-3GPP access gateway supports the slice, and the access management network element may send a second request message to a session management network element. When the slice supported by the second non-3GPP access gateway does not include the slice of the second connection, it may be determined that the second non-3GPP access gateway does not support the slice, and the access management network element may initiate a release procedure of the first connection, for example, send a release request message to the session management network element, to release the first connection.

The access management network element may further distinguish a source non-3GPP access gateway from a target non-3GPP access gateway. For example, the access management network element may store a connection marker of a non-3GPP access gateway. The connection marker is used to distinguish the source non-3GPP access gateway from the target non-3GPP access gateway, or is used to distinguish a new connection from an old connection. For example, the access management network element sets first identification information of the first connection or the first non-3GPP access gateway, and sets second identification information of the second connection or the second non-3GPP access gateway.

In an implementation, after S605, the access management network element may further send session management information to an access gateway corresponding to access gateway information. For example, the access management network element may distinguish the first non-3GPP access gateway from the second non-3GPP access gateway based on the first identification information and/or the second identification information, so that the access management network element may send, to the first non-3GPP access gateway, information used to release the first connection, and/or send, to the second non-3GPP access gateway, information used to establish the second connection.

In an implementation, in S702, when a new non-3GPP access point or a new non-3GPP access gateway is detected, the user equipment may determine that the switching from the first connection to the second connection needs to be performed, or when a non-3GPP access gateway changes due to a change of a non-3GPP access point, the user equipment may determine that the switching from the first connection to the second connection needs to be performed.

In S703, in an implementation, the user equipment may use a detected new non-3GPP access gateway as the second non-3GPP access gateway. In another implementation, the user equipment selects the second non-3GPP access gateway based on a slice corresponding to the first connection. The slice corresponding to the second connection includes the slice corresponding to the first connection. For example, the slice of the second connection may be the slice supported by the second non-3GPP access gateway. The slice corresponding to the first connection may be a slice supported by the first non-3GPP access gateway. Optionally, the slice of the first connection includes a slice of a session. In still another implementation, the user equipment may select the second non-3GPP access gateway based on a priority of the slice corresponding to the second connection. For example, the second non-3GPP access gateway supports the priority of the slice corresponding to the second connection. In still another implementation, the user equipment selects the second non-3GPP access gateway based on a slice priority. For example, the user equipment selects, based on the slice priority, a second non-3GPP access gateway that supports a first-priority slice. If the first-priority slice cannot be selected or is not supported, the user equipment selects a second non-3GPP access gateway that supports a second-priority slice. If the second-priority slice cannot be selected or is not supported, the user equipment continues to select a second non-3GPP access gateway that supports a third-priority slice until the second non-3GPP access gateway is selected. Optionally, the first priority is higher than the second priority, and the second priority is higher than the third priority.

In an implementation, in S704, the user equipment may send a request message to the second non-3GPP access gateway, and the request message is used to request to establish the second connection of the user equipment by using the second non-3GPP access gateway. Optionally, the request message is the first request message.

In Manner 1, the user equipment may further receive information that is sent by the first non-3GPP access gateway and that is used to release the first connection, and the user equipment releases the first connection.

In Manner 2, the user equipment may further perform data transmission by using the first connection and the second connection. For example, data transmitted by using the first connection and data transmitted by using the second connection may be the same, or may be different. For example, the user equipment may receive first address information that is allocated by a network side (for example, the session management network element or a user plane network element) to the first connection, and receive second address information that is allocated by the network side to the second connection. The first address information and the second address information may be the same or different. When the user equipment performs data transmission by using the second connection, the user equipment may encapsulate a data packet based on the second address information, and send the data packet by using the second connection. The address information herein may be information such as an IP address, an FQDN, an Ethernet address, a MAC address, or a port number.

In Manner 2, the user equipment may actively initiate the release procedure of the first connection. For example, when data transmission of the first connection is completed, the user equipment sends a connection release request message to the first non-3GPP access gateway. Optionally, the connection release request message includes indication information, the indication information indicates that the first non-3GPP access gateway sends an end data packet to the user plane network element, and the first non-3GPP access gateway sends the end data packet to the user plane network element based on the indication information.

Optionally, "determining to switch from the first connection to the second connection" in embodiments of this application, for example, S503, S603, or S702, may be understood as determining that the switching from the first connection to the second connection is expected to be performed, or determining that the switching from the first connection to the second connection needs to be performed, or determining that the switching from the first connection to the second connection is wanted to be performed, or determining that the switching from the first connection to the second connection is allowed to be performed. Names and types of related "messages" and "indication information" are not limited in embodiments of this application.

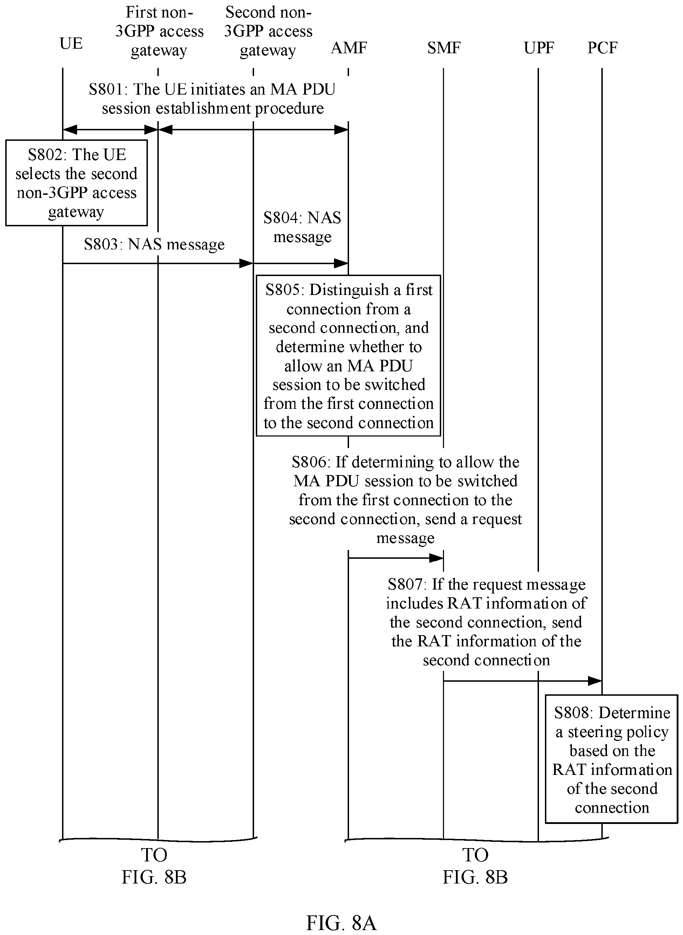

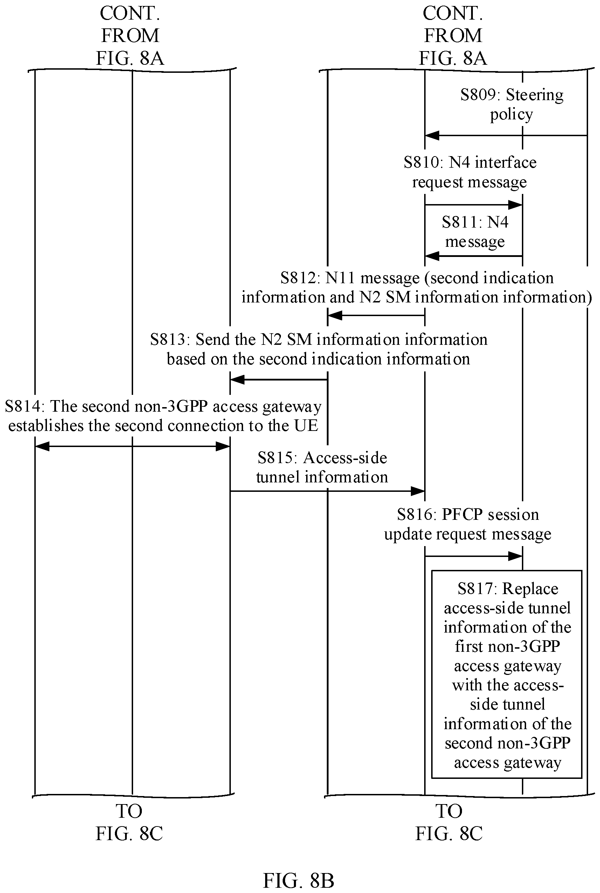

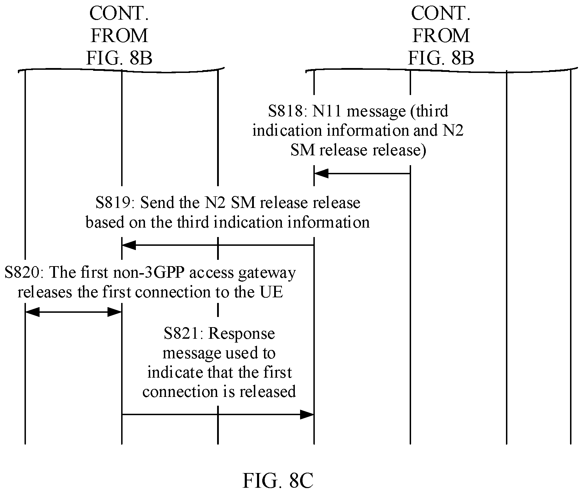

The following describes Manner 1 with reference to a specific example. FIG. 8A, FIG. 8B, and FIG. 8C are example diagrams of a communication process. The following steps are included.

S801: UE initiates an MAPDU session establishment procedure.

In S801, the UE may send a PDU session establishment message to an AMF by using a first non-3GPP access gateway (for example, an N3IWF-S or a TNGF-S). The PDU session establishment message includes MA PDU session request indication information, and the MA PDU session request indication information is used to identify a session as an MA PDU session. A multi-access path of the MA PDU session includes a 3GPP path and a non-3GPP path. In this embodiment of this application, the non-3GPP path is mainly used for description.

In S801, the UE establishes a first connection by using the first non-3GPP access gateway (for example, the N3IWF-S or the TNGF-S). The N3IWF-S is a source (source, S) N3IWF, and the TNGF-S is a source (S) TNGF.

S802: The UE selects a second non-3GPP access gateway.

The UE detects a new 3GPP access point, and the UE establishes a connection to the new 3GPP access point. The UE may select a target 3GPP access gateway (namely, the second non-3GPP access gateway, for example, an N3IWF-T or a TNGF-T), and establish a second connection to the target 3GPP access gateway by using the new 3GPP access point. The N3IWF-T is a target (target, T) N3IWF, and the TNGF-T is a target (T) TNGF.

When the UE selects the second non-3GPP access gateway, the second non-3GPP access gateway may be selected based on a slice of the session. The UE may obtain policy information sent by a network side. The policy information is used to select a non-3GPP access gateway. The policy information may include an identifier of the non-3GPP access gateway and information about a slice supported by the non-3GPP access gateway or a type of a slice supported by the non-3GPP access gateway.

When the UE selects the second non-3GPP access gateway based on the slice of the session, specifically, the UE obtains (from the policy information) a slice supported by a target 3GPP access gateway, and preferentially selects a non-3GPP access gateway that supports the slice of the session as the second non-3GPP access gateway. Otherwise, the UE may select the second non-3GPP access gateway based on a slice priority.

S803: The UE sends a NAS message to the second non-3GPP access gateway. Correspondingly, the second non-3GPP access gateway receives the NAS message.

The NAS message may be a registration (registration) request message, or may be a service request (service request, SR) message, or may be a PDU session establishment message. Optionally, the NAS message may include a user identifier, and the user identifier may be a temporary user identifier or a permanent user identifier. Optionally, the NAS message may include an MA PDU session identifier (MAPDU session ID), indicating that the UE requests to switch the PDU session from the first connection to the second connection.

S804: The second non-3GPP access gateway sends the NAS message to the AMF. Correspondingly, the AMF receives the NAS message.

In S804, the second non-3GPP access gateway forwards the NAS message to the AMF through an N2 interface. Specifically, the second non-3GPP access gateway sends an N2 message to the AMF, and the N2 message includes the NAS message.

S805: The AMF distinguishes the first connection from the second connection, and determines whether to allow the MA PDU session to be switched from the first connection to the second connection.

The AMF may parse the received NAS message or the received N2 message, and determine a user identifier carried in the NAS message or the N2 message. The AMF searches for a user context based on the user identifier. The user context stores an identifier of the first connection and an identifier of the second connection. Therefore, the AMF may distinguish the first connection from the second connection in the user context. The first connection may be marked as an old (old) connection, and the second connection may be marked as a new (new) connection.

The AMF may determine, based on the slice of the MAPDU session, whether to allow the MA PDU session to be switched from the first connection to the second connection. Specifically, if the second non-3GPP access gateway supports the slice of the MA PDU session, that is, the slice supported by the second non-3GPP access gateway includes the slice of the MA PDU session, the AMF allows the MA PDU session to be switched from the first connection to the second connection. If the slice supported by the second non-3 GPP access gateway does not include the slice of the MAPDU session, the AMF may initiate a release procedure of the MAPDU session. Specifically, the AMF may initiate a release procedure of the first connection of the MA PDU session.

S806: If determining to allow the MA PDU session to be switched from the first connection to the second connection, the AMF sends a request message to an SMF. Correspondingly, the SMF receives the request message.

The request message may include at least one of the following: the MA PDU session identifier, first indication information, access gateway information of the second non-3GPP access gateway, or RAT information of the second connection. The first indication information indicates to switch the session from the first connection to the second connection. The first indication information may be a switching indication of a non-3GPP access gateway, a switching indication of a same RAT connection, or the like. This is not limited in embodiments of this application. The access gateway information of the second non-3GPP access gateway may be one or more of IP address information of the second non-3GPP access gateway, an FQDN, or a device identifier. Optionally, when a RAT of the first connection is the same as a RAT of the second connection, the request message at least includes the first indication information. When the RAT of the first connection is different from the RAT of the second connection, that is, when the RAT of the second connection changes, the request message at least includes the RAT information of the second connection.

S807: If the request message includes the RAT information of the second connection, the SMF sends the RAT information of the second connection to a PCF. Correspondingly, the PCF receives the RAT information of the second connection.

S808: The PCF determines a steering policy based on the RAT information of the second connection.

The PCF determines, based on the RAT information of the second connection, to update the steering policy, or to keep a current steering policy unchanged.

S809: The PCF sends the steering policy to the SMF. Correspondingly, the SMF receives the steering policy.

S810: The SMF sends an N4 interface request message to a UPF. Correspondingly, the UPF receives the N4 interface request message.

The SMF initiates an update/switching procedure of the non-3GPP access gateway for the MA PDU session based on the request message. For details, refer to S810 to S821.

In S810, the N4 interface request message may be a packet forwarding control protocol (packet forwarding control protocol, PFCP) connection establishment request message or a PFCP connection update request message. Optionally, the N4 interface request message includes indication information of the non-3GPP access gateway. If user plane tunnel information is allocated by the SMF, the N4 interface request message further optionally includes user plane tunnel information, for example, UPF address information (for example, IP address information) and a tunnel endpoint identifier (tunnel endpoint identifier, TEID).

In a non-3GPP access gateway update/switching procedure, for an MA PDU session in an active (active) state, the SMF initiates a connection establishment procedure between the second non-3GPP access gateway and the UPF (refer to S812 to S817), and initiates a connection release procedure between the first non-3GPP access gateway and the UPF (refer to S818 to S821).

If the MA PDU session is in an inactive (inactive) state, that is, the first non-3GPP access gateway does not establish a user plane connection to the UPF, the SMF does not need to initiate the connection release procedure between the first non-3GPP access gateway and the UPF, and only the connection establishment procedure between the second non-3GPP access gateway and the UPF is initiated. In other words, steps S818 to S821 are optional.

S811: The UPF sends an N4 message to the SMF. Correspondingly, the SMF receives the N4 message.

The N4 message includes the indication information of the non-3GPP access gateway. If the user plane tunnel information is allocated by the UPF, the N4 message optionally includes the user plane tunnel information.

S812: The SMF sends an N11 message to the AMF, where the N11 message includes second indication information, N2 SM information, and the like. Correspondingly, the AMF receives the N11 message.

The second indication information indicates to send the N2 SM information to the second non-3GPP access gateway. The second indication information may be indication information of the second non-3GPP access gateway, new N2 interface indication information, or the access gateway information of the second non-3GPP access gateway.

S813: The AMF sends the N2 SM information to the second non-3GPP access gateway based on the second indication information. Correspondingly, the second non-3GPP access gateway receives the N2 SM information.

S814: The second non-3GPP access gateway establishes the second connection to the UE.

The second connection is a user plane connection of the MAPDU session. Specifically, the user plane connection may be an Internet protocol security (Internet protocol security, IPSec) tunnel or a child security tunnel.

S815: The second non-3GPP access gateway sends allocated access-side tunnel information to the SMF. Correspondingly, the SMF receives the access-side tunnel information.

The second non-3GPP access gateway allocates the access-side tunnel information (or referred to as user plane tunnel information). The access-side tunnel information includes address information of the second non-3GPP access gateway and a tunnel identifier.

The second non-3GPP access gateway may send the access-side tunnel information to the AMF, and the AMF forwards the access-side tunnel information to the SMF. Optionally, the AMF alternatively sends second non-3GPP access indication information to the SMF.

S816: The SMF sends a PFCP session update request message to the UPF.

The PFCP session update request message includes the access-side tunnel information.

S817: The UPF replaces access-side tunnel information of the first non-3GPP access gateway with the access-side tunnel information of the second non-3GPP access gateway.

S818: The SMF sends the N11 message to the AMF, and the N11 message includes third indication information and N2 SM release (release). Correspondingly, the AMF receives the N11 message.

The third indication information indicates to send the N2 SM release to the first non-3GPP access gateway. The third indication information may be indication information of the first non-3GPP access gateway, old N2 interface indication information, or access gateway information of the first non-3GPP access gateway.

S819: The AMF sends the N2 SM release to the first non-3GPP access gateway based on the third indication information. Correspondingly, the first non-3GPP access gateway receives the N2 SM release.

S820: The first non-3GPP access gateway releases the first connection to the UE.

The first connection is a user plane connection of the MA PDU session. Specifically, the user plane connection may be an IPSec security connection or a child security connection.

S821: The first non-3GPP access gateway sends a response message to the SMF, to indicate that the first connection is released. Correspondingly, the SMF receives the response message.

The first non-3GPP access gateway may send the response message to the AMF, and the AMF forwards the response message to the SMF.

It may be understood that, when switching between non-3GPP access gateways can be implemented, an execution sequence of the steps is not limited, and sending may be performed at the same time, or in a sequence.

In the example, the network side implements establishment of a connection of a target non-3GPP access gateway, and release of a connection of a source non-3GPP access gateway, and supports the UE in switching the non-3GPP access gateway.

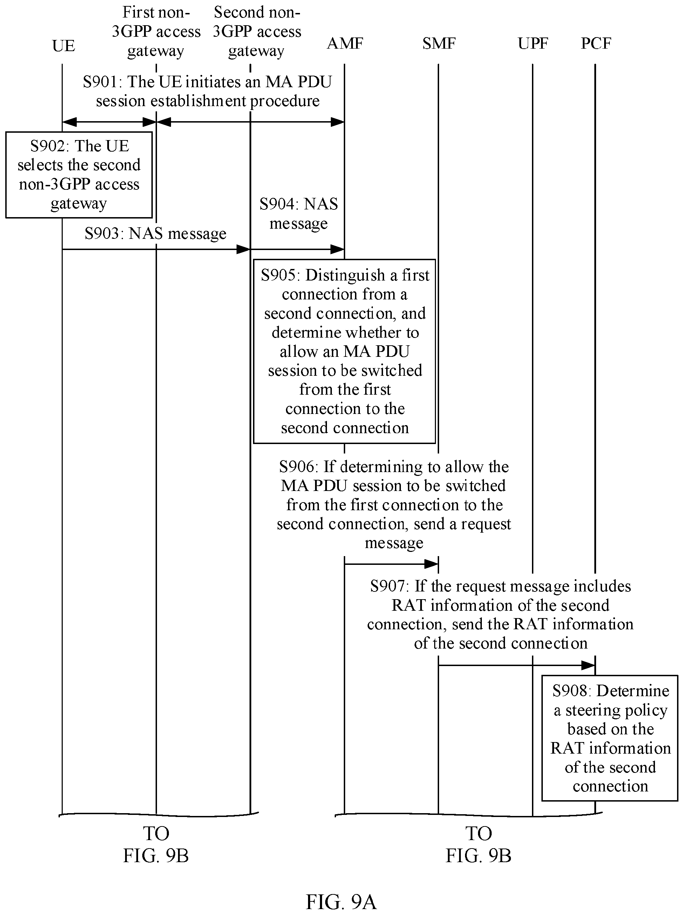

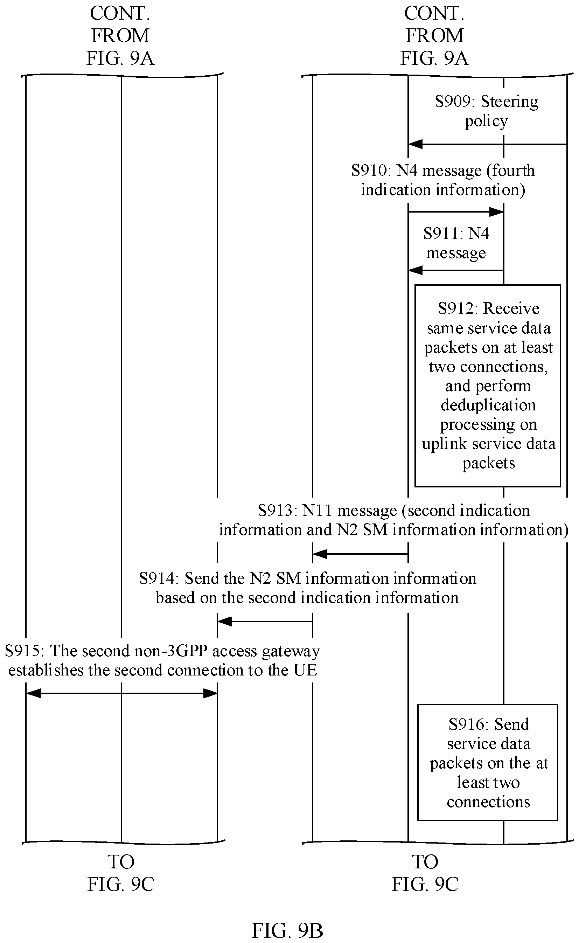

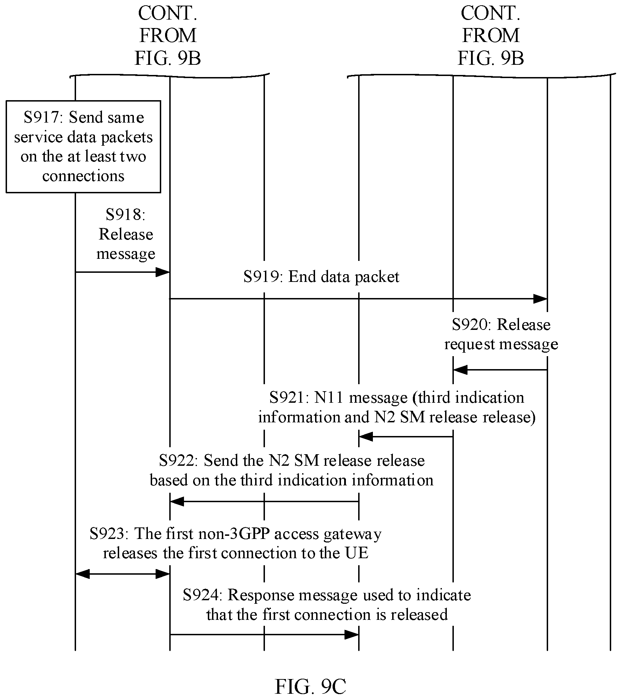

The following describes Manner 2 with reference to a specific example. FIG. 9A, FIG. 9B, and FIG. 9C are example diagrams of a communication process. The following steps are included.

For a process of S901 to S909, refer to S801 to S809.

S910: An SMF sends an N4 message to a UPF, and the N4 message includes fourth indication information. Correspondingly, the UPF receives the N4 message.

The N4 message may be a PFCP connection establishment request message or a PFCP connection update request message.

The fourth indication information indicates the UPF to perform data transmission by using a first connection and a second connection. For example, the fourth indication information indicates the UPF to reserve at least two user plane connections and perform redundant transmission on the at least two connections. Redundant transmission indicates that same data packets of downlink data are simultaneously sent on at least two connections, and deduplication is performed on uplink data that is received on the at least two connections. The fourth indication information may be a redundant transmission indication, a multi-non-3GPP access gateway transmission indication, a multi-connection transmission indication, or an optimized switching indicator. This is not limited in this embodiment of this application.

The UPF may distinguish the first connection from the second connection. For example, the first connection is marked as an old connection, and the second connection is marked as a new connection.

For a process of S911, refer to S811.

S912: The UPF receives same service data packets on the at least two connections, and the UPF performs deduplication processing on uplink service data packets.

For a process of S913 to S915, refer to S812 to S814.

S916: The UPF sends service data packets on the at least two connections.

The UPF may receive access-side tunnel information sent by a second non-3GPP access gateway, or the UPF may receive access-side tunnel information allocated by another UPF that is connected to the second non-3GPP access gateway. In this way, the UPF may perform redundant transmission on the at least two connections.

S917: UE sends same service data packets on the at least two connections.

The UE establishes the second connection to the second non-3GPP access gateway in S914, and the UE may perform redundant transmission on the at least two connections.

S918: The UE sends a release message to a first non-3GPP access gateway. Correspondingly, the first non-3GPP access gateway receives the release message.

When the UE determines to release the first connection, the UE initiates a release procedure of the first connection. For example, when the UE determines that the second connection is successfully established, the UE determines to release the first connection. The release message may be an information exchange (information exchange) message.

Optionally, the release message includes an end indication, and the end indication indicates that the first non-3GPP access gateway sends an end data packet to the UPF. The end indication may be an end marker (end marker), the end data packet may be an end marker data packet, or the end data packet may be a general packet radio service (general packet radio service, GPRS) tunneling protocol (GPRS tunneling protocol, GTP)-user plane network element (user, U) protocol end marker packet.

S919: The first non-3GPP access gateway sends the end data packet to the UPF. Correspondingly, the UPF receives the end data packet. For the end data packet, refer to the definition in S917.

S920: The UPF sends a release request message to the SMF. Correspondingly, the SMF receives the release request message.

The release request message indicates the SMF to initiate the release procedure of the first connection. The release request message may be a PFCP session report (report) message, and the PFCO session report message includes release indication information and optional first non-3GPP access indication information.

The SMF may initiate the release procedure of the first connection based on the release indication information and the optional first non-3GPP access indication information. For details, refer to S921 to S924.

For a process of S921 to S924, refer to S817 to S821.

It may be understood that, when switching between non-3GPP access gateways can be implemented, an execution sequence of the steps is not limited, and sending may be performed at the same time, or in a sequence.

In the example, a network side implements establishment of a connection of a target non-3GPP access gateway, and release of a connection of a source non-3GPP access gateway, and supports the UE in switching the non-3GPP access gateway. In addition, multi-path redundant transmission is supported in this example. To avoid packet loss during switching, a plurality of connections may be used to transmit data. After the switching is completed, the UE notifies a network layer to release the connection of the source non-3GPP access gateway.

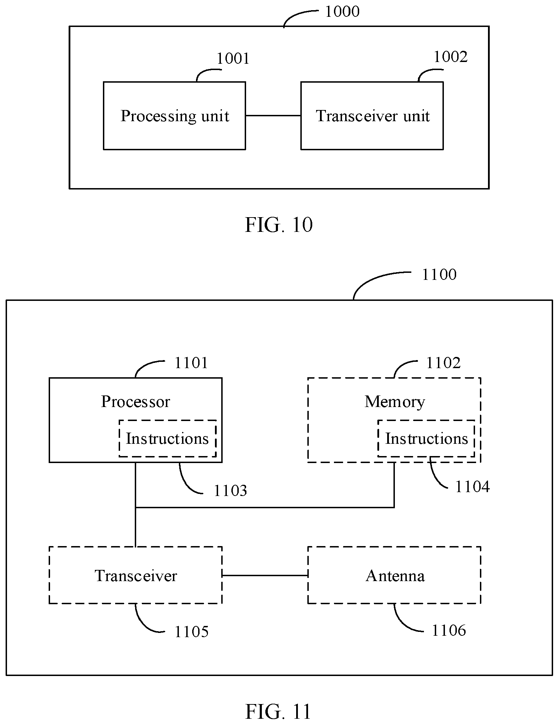

Based on the same technical concept as the foregoing communication method, an embodiment of this application further provides a communication apparatus. As shown in FIG. 10, a communication apparatus 1000 includes a processing unit 1001 and a transceiver unit 1002. Optionally, a function implemented by the transceiver unit 1002 may be implemented by a communication interface, and the transceiver unit may include a receiving unit and/or a sending unit. The communication apparatus 1000 may be used in a session management network element, an access management network element, user equipment, or a user plane network element, or located in a session management network element, an access management network element, user equipment, or a user plane network element. The communication apparatus 1000 may be configured to implement the method described in the foregoing method embodiments. For example, the communication apparatus 1000 can perform steps performed by the session management network element, the access management network element, or the user plane network element in the methods in FIG. 5, FIG. 6, FIG. 7, FIG. 8A, FIG. 8B, and FIG. 8C, and FIG. 9A, FIG. 9B, and FIG. 9C.

In a possible embodiment, the communication apparatus 1000 is used in the session management network element.

For example, the transceiver unit 1002 is configured to establish a first connection of the user equipment by using a first non-3GPP access gateway and receive a request message. The request message is used to request to establish a second connection of the user equipment by using a second non-3GPP access gateway.

The processing unit 1001 is configured to determine, based on the request message, to switch from the first connection to the second connection.

The transceiver unit 1002 is further configured to send, to the access management network element, session management information and access gateway information corresponding to the session management information.

The request message includes first indication information, and the first indication information indicates to switch from the first connection to the second connection.

The processing unit 1001 is specifically configured to determine, based on the first indication information, to switch from the first connection to the second connection.

In an implementation, the request message includes an access type of the second connection.

The processing unit 1001 is specifically configured to determine, based on an access type of the first connection and the access type of the second connection, to switch from the first connection to the second connection.

In an implementation, the transceiver unit 1002 is further configured to send the access type of the second connection to a policy control network element, and the access type is used by the policy control network element to determine a steering policy.

In an implementation, the session management information is information used to establish the second connection, and the access gateway information corresponding to the session management information is information about the second non-3GPP access gateway; and/or
the session management information is information used to release the first connection, and the access gateway information corresponding to the session management information is information about the first non-3GPP access gateway.

In an implementation, the transceiver unit 1002 is further configured to send second indication information to the user plane network element, and the second indication information indicates that the user plane network element performs data transmission by using the first connection and the second connection.

In an implementation, the transceiver unit 1002 is further configured to send third indication information to the user plane network element, and the third indication information indicates to switch from the first connection to the second connection.

In an implementation, the transceiver unit 1002 is further configured to receive fourth indication information sent by the user plane network element, and the fourth indication information indicates to release the first connection.

The session management information is information used to release the first connection, and the access gateway information corresponding to the session management information is information about the first non-3GPP access gateway.

In a possible embodiment, the communication apparatus 1000 is used in the access management network element.

For example, the transceiver unit 1002 is configured to establish the first connection of the user equipment by using the first non-3GPP access gateway and receive a first request message. The first request message is used to request to establish the second connection of the user equipment by using the second non-3GPP access gateway.

The processing unit 1001 is further configured to determine to switch from the first connection to the second connection.

The transceiver unit 1002 is further configured to: send a second request message to the session management network element, where the second request message is used to request to establish the second connection of the user equipment by using the second non-3GPP access gateway; receive the session management information and the access gateway information corresponding to the session management information; and send the session management information to an access gateway corresponding to the access gateway information.

In an implementation, the processing unit 1001 is specifically configured to determine that the second non-3GPP access gateway supports a slice.

In an implementation, the processing unit 1001 is further configured to determine that the slice supported by the second non-3GPP access gateway includes a slice of the second connection.

In an implementation, the second request message includes the first indication information, and the first indication information indicates to switch from the first connection to the second connection; and/or
the second request message includes the access type of the second connection.

In an implementation, the session management information is information used to release the second connection, and the access gateway information corresponding to the session management information is information about the second non-3GPP access gateway; and/or
the session management information is information used to release the first connection, and the access gateway information corresponding to the session management information is information about the first non-3GPP access gateway.

In an implementation, the processing unit 1001 is further configured to store first identification information of the first connection or the first non-3GPP access gateway, and store second identification information of the second connection or the second non-3GPP access gateway.

In an implementation, the processing unit 1001 is further configured to distinguish, based on the first identification information and the second identification information, the first non-3GPP access gateway from the second non-3GPP access gateway.

The transceiver unit 1002 is specifically configured to send, to the first non-3GPP access gateway, information used to release the first connection; and/or send, to the second non-3GPP access gateway, information used to establish the second connection.

In a possible embodiment, the communication apparatus 1000 is used in the user equipment.

The transceiver unit 1002 is configured to establish the first connection of the user equipment by using the first non-3GPP access gateway.

The processing unit 1001 is configured to determine that switching from the first connection to the second connection needs to be performed; and select, based on policy information, the second non-3GPP access gateway corresponding to the second connection.

The transceiver unit 1002 is further configured to establish the second connection of the user equipment by using the second non-3GPP access gateway.

In an implementation, the processing unit 1001 is specifically configured to select the second non-3GPP access gateway based on a slice of the first connection, where a type of the slice of the second connection includes the slice of the first connection; and/or select the second non-3GPP access gateway based on a priority of the slice of the second connection.

In an implementation, the transceiver unit 1002 is specifically configured to send the request message to the second non-3GPP access gateway, and the request message is used to request to establish the second connection of the user equipment by using the second non-3GPP access gateway.

In an implementation, the transceiver unit 1002 is further configured to receive information that is sent by the first non-3GPP access gateway and that is used to release the first connection.

The processing unit 1001 is further configured to release the first connection.

In an implementation, the transceiver unit 1002 is further configured to perform data transmission by using the first connection and the second connection.

In an implementation, when data transmission of the first connection is completed, the transceiver unit 1002 is further configured to send a connection release request message to the first non-3GPP access gateway.

In an implementation, the connection release request message includes indication information, and the indication information indicates the first non-3GPP access gateway to send an end data packet to the user plane network element.

In an implementation, the transceiver unit 1002 is further configured to receive first address information allocated to the first connection; and receive second address information allocated to the second connection.

In an implementation, the processing unit 1001 is further configured to encapsulate a data packet based on the second address information.

The transceiver unit 1002 is further configured to send the data packet by using the second connection.

It should be noted that in embodiments of this application, division into modules is an example, and is only a logical function division. During actual implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software functional unit. For example, the transceiver unit may include the receiving unit and/or the sending unit.

When the integrated unit is implemented in the form of the software functional unit and is sold or used as an independent product, the integrated unit may be stored in one computer-readable storage medium. Based on such an understanding, the integrated unit is stored in a storage medium as a computer software product, and includes a plurality of instructions for instructing a computer device (which may be a personal computer, a server, a network device, or the like) or a processor (processor) to perform all or a part of the steps of the methods described in embodiments of this application.

FIG. 11 is a schematic diagram of a structure of a communication apparatus 1100 according to an embodiment of this application. The communication apparatus 1100 may be configured to implement the method described in the foregoing method embodiment. For details, refer to the description in the foregoing method embodiment. For example, the communication apparatus 1100 can perform steps performed by a session management network element, an access management network element, user equipment, or a user plane network element in the methods in FIG. 5, FIG. 6, FIG. 7, FIG. 8A, FIG. 8B, and FIG. 8C, and FIG. 9A, FIG. 9B, and FIG. 9C.

The communication apparatus 1100 includes one or more processors 1101. The processor 1101 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The communication apparatus 1100 includes one or more processors 1101, and the one or more processors 1101 may implement the method in the foregoing embodiments. Optionally, the processor 1101 may further implement another function in addition to the method in the foregoing embodiments.

In a design, the processor 1101 may execute instructions, so that the communication apparatus 1100 performs the method described in the foregoing method embodiments. All or a part of the instructions may be stored in the processor 1101, for example, all or a part of instructions 1103 may be stored in the processor 1101, or the instructions 1103 are stored in the processor 1101, and instructions 1104 are stored in a memory 1102 coupled to the processor. The processor 1101 may synchronously execute the instructions 1103 and the instructions 1104, so that the communication apparatus 1100 performs the method described in the foregoing method embodiments. The instructions 1103 and the instructions 1104 are also referred to as computer programs.

In still another possible design, the communication apparatus 1100 may further include a circuit, and the circuit may implement a function in the foregoing method embodiments.

In still another possible design, the communication apparatus 1100 may include one or more memories 1102. The memory 1102 stores the instructions 1104, and the instructions may be run on the processor 1101, so that the communication apparatus 1100 performs the method described in the foregoing method embodiments. Optionally, the memory 1102 may further store data. Optionally, the processor 1101 may alternatively store instructions and/or data. For example, the one or more memories 1102 may store the correspondence described in the foregoing embodiments, or the related parameter, table, or the like in the foregoing embodiments. The processor and the memory may be separately disposed, or may be integrated with each other.

In still another possible design, the communication apparatus 1100 may further include a transceiver 1105 and an antenna 1106. The processor 1101 may be referred to as a processing unit, and controls an apparatus (a terminal or a base station). The transceiver 1105 may be referred to as a transceiver, a transceiver circuit, a transceiver unit, or the like, and is configured to implement a transceiver function of the apparatus by using the antenna 1106.

The processor may be a general-purpose central processing unit (central processing unit, CPU), a microprocessor, an application-specific integrated circuit (application-specific integrated circuit, ASIC), one or more integrated circuits that are configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and accomplished by a hardware decoding processor, or may be performed and accomplished by a combination of hardware and software modules in the decoding processor. The software module may be stored in a storage medium, and the storage medium is located in the memory.

The memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), which is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type. The memory may exist independently, and is connected to the processor through a communication line. The memory may also be integrated with the processor.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

An embodiment of this application further provides a communication system, including a session management network element and an access management network element. The session management network element and the access management network element may implement the communication method in any one of the foregoing method examples.

Optionally, the communication system further includes one or more of user equipment, a first non-3GPP access gateway, a second non-3GPP access gateway, a user plane network element, or a policy control network element.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions in embodiments of this application are all or partially generated. The computer may be the communication apparatus. The computer instructions may be stored in a computer-readable storage medium or may be transmitted from a computer-readable storage medium to another computer-readable storage medium. The computer-readable storage medium may be the foregoing storage medium or the foregoing memory.

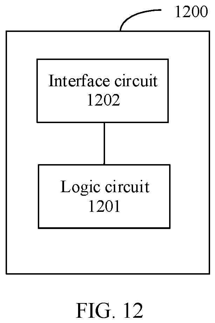

In a possible design, when the communication apparatus is a chip, for example, a chip in a network device or a chip in a terminal device, a determining unit or the processor 1101 may be one or more logic circuits. A sending unit, a receiving unit, or the transceiver 1105 may be an input/output interface, or referred to as a communication interface, an interface circuit, an interface, or the like. Alternatively, the transceiver 1105 may be a sending unit and a receiving unit. The sending unit may be an output interface, the receiving unit may be an input interface, and the sending unit and the receiving unit are integrated in one device, such as an input/output interface. As shown in FIG. 12, a communication apparatus 1200 shown in FIG. 12 includes a logic circuit 1201 and an interface circuit 1202. In other words, the foregoing processing unit or the processor 1101 may be implemented by using the logic circuit 1201, and a transceiver unit or the transceiver 1105 may be implemented by using the interface circuit 1202. The logic circuit 1201 may be a chip, a processing circuit, an integrated circuit, a system on chip (system on chip, SoC) chip, or the like. The interface circuit 1202 may be a communication interface, an input/output interface, or the like. In embodiments of this application, the logic circuit and the interface circuit may alternatively be coupled to each other. Specific connection manners of the logic circuit and the interface circuit are not limit in embodiments of this application.

In some embodiments of this application, the logic circuit 1201 and the interface circuit 1202 may be configured to perform a function, an operation, or the like performed by the foregoing network function or control plane function. The interface circuit 1202 may be configured to receive a signal from another communication apparatus other than the communication apparatus 1200 and transmit the signal to the logic circuit 1201, or send a signal from the logic circuit 1201 to another communication apparatus other than the communication apparatus 1200. The logic circuit 1201 may be configured to execute code instructions to implement any one of the foregoing method embodiments.

For example, the interface circuit 1202 is configured to send, to an access management network element, session management information and access gateway information corresponding to the session management information. For the function or the operation performed by the communication apparatus, refer to the foregoing method embodiments. Details are not described herein again.

Persons of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether functions are performed by hardware or software depends on particular applications and design constraints of the technical solutions. Persons skilled in the art may use different methods to implement the described functions for each particular application, but it should not be considered that the implementation goes beyond the scope of this application.

Persons skilled in the art may clearly understand that, for ease and brevity of description, for specific working processes of the system, apparatus, and unit described above, refer to the corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

With descriptions of the foregoing implementations, persons skilled in the art may clearly understand that this application may be implemented by hardware, firmware, or a combination thereof. When software is used for implementation, the foregoing functions may be stored in a computer-readable medium or transmitted as one or more instructions or code in a computer-readable medium. The computer-readable medium includes a computer storage medium and a communication medium, and the communication medium includes any medium that enables a computer program to be transmitted from one place to another place. The storage medium may be any usable medium accessible by a computer.

In summary, what is described above is merely embodiments of the technical solutions of this application, but is not intended to limit the protection scope of this application. Any modification, equivalent replacement, improvement, or the like made without departing from the principle of this application shall fall within the protection scope of this application.

## Claims

1. A communication method, wherein the method comprises:
establishing, by a session management network element, a first connection of user equipment by using a first non-3GPP access gateway;
receiving, by the session management network element, a request message, wherein the request message is used to request to establish a second connection of the user equipment by using a second non-3GPP access gateway;
determining, by the session management network element based on the request message, to switch from the first connection to the second connection; and
sending, by the session management network element to an access management network element, session management information and access gateway information corresponding to the session management information.

2. The method according to claim 1, wherein the access gateway information is indication information of a non-3GPP radio access type, and the indication information of the non-3GPP radio access type is used to determine an access gateway.

3. The method according to claim 1 or 2, wherein the request message comprises first indication information, and the first indication information indicates to switch from the first connection to the second connection; and
the determining, by the session management network element based on the request message, to switch from the first connection to the second connection comprises:
determining, by the session management network element based on the first indication information, to switch from the first connection to the second connection.

4. The method according to any one of claims 1 to 3, wherein the request message comprises an access type of the second connection; and
the determining, by the session management network element based on the request message, to switch from the first connection to the second connection comprises:
determining, by the session management network element based on an access type of the first connection and the access type of the second connection, to switch from the first connection to the second connection.

5. The method according to claim 4, wherein the access type of the first connection or the access type of the second connection is a non-3GPP radio access type.

6. The method according to claim 2 or 5, wherein the non-3GPP radio access type comprises an untrusted non-3GPP access type, a trusted non-3GPP access type, an untrusted wireless local area network WLAN access type, or a trusted WLAN access type.

7. The method according to any one of claims 4 to 6, wherein the method further comprises:
sending, by the session management network element, the access type of the second connection to a policy control network element, wherein the access type of the second connection is used to determine a steering policy.

8. The method according to any one of claims 1 to 7, wherein the session management information is information used to establish the second connection, and the access gateway information corresponding to the session management information is information about the second non-3GPP access gateway; and/or
the session management information is information used to release the first connection, and the access gateway information corresponding to the session management information is information about the first non-3GPP access gateway.

9. The method according to any one of claims 1 to 7, wherein the method further comprises:
sending, by the session management network element, second indication information to a user plane network element, wherein the second indication information indicates that the user plane network element performs data transmission by using the first connection and the second connection.

10. The method according to any one of claims 1 to 7, wherein the method further comprises:
sending, by the session management network element, third indication information to a user plane network element, wherein the third indication information indicates to switch from the first connection to the second connection.

11. The method according to claim 9 or 10, wherein the method further comprises:
receiving, by the session management network element, fourth indication information sent by the user plane network element, wherein the fourth indication information indicates to release the first connection, wherein
the session management information is information used to release the first connection, and the access gateway information corresponding to the session management information is information about the first non-3GPP access gateway.

12. A communication method, wherein the method comprises:
establishing, by an access management network element, a first connection of user equipment by using a first non-3GPP access gateway;
receiving, by the access management network element, a first request message, wherein the first request message is used to request to establish a second connection of the user equipment by using a second non-3GPP access gateway;
determining, by the access management network element, to switch from the first connection to the second connection;
sending, by the access management network element, a second request message to a session management network element, wherein the second request message is used to request to establish the second connection of the user equipment by using the second non-3GPP access gateway;
receiving, by the access management network element, session management information and access gateway information corresponding to the session management information; and
sending, by the access management network element, the session management information to an access gateway corresponding to the access gateway information.

13. The method according to claim 12, wherein the access gateway information is indication information of a non-3GPP radio access type, and the indication information of the non-3GPP radio access type is used to determine an access network element.

14. The method according to claim 12 or 13, wherein the determining, by the access management network element, to switch from the first connection to the second connection comprises:
determining, by the access management network element, that the second non-3GPP access gateway supports a slice.

15. The method according to any one of claims 12 to 14, wherein before the sending, by the access management network element, a second request message to a session management network element, the method further comprises:
determining, by the access management network element, that the slice supported by the second non-3GPP access gateway comprises a slice of the second connection.

16. The method according to any one of claims 12 to 15, wherein the second request message comprises first indication information, and the first indication information indicates to switch from the first connection to the second connection; and/or
the second request message comprises an access type of the second connection.

17. The method according to claim 16, wherein the access type of the second connection is a non-3GPP radio access type.

18. The method according to claim 13 or 17, wherein the non-3GPP radio access type comprises an untrusted non-3GPP access type, a trusted non-3GPP access type, an untrusted wireless local area network WLAN access type, or a trusted WLAN access type.

19. The method according to any one of claims 12 to 18, wherein the session management information is information used to establish the second connection, and the access gateway information corresponding to the session management information is information about the second non-3GPP access gateway; and/or
the session management information is information used to release the first connection, and the access gateway information corresponding to the session management information is information about the first non-3GPP access gateway.

20. The method according to claim 19, wherein the method further comprises:
storing, by the access management network element, first identification information of the first connection or the first non-3GPP access gateway, or a type of the first non-3GPP access gateway; and
storing, by the access management network element, second identification information of the second connection or the second non-3GPP access gateway, or a type of the second non-3GPP access gateway.

21. The method according to claim 20, wherein the method further comprises:
determining, by the access management network element, the first non-3GPP access gateway and the second non-3GPP access gateway based on the first identification information and the second identification information; and
the sending, by the access management network element, the session management information to an access gateway corresponding to the access gateway information comprises: sending, by the access management network element to the first non-3GPP access gateway, information used to release the first connection; and/or sending, to the second non-3GPP access gateway, information used to establish the second connection.

22. The method according to claim 20, wherein the method further comprises:
determining, by the access management network element, a non-3GPP radio access type of the first non-3GPP access gateway and a non-3GPP radio access type of the second non-3GPP access gateway based on the first identification information and the second identification information; and the sending, by the access management network element, the session management information to an access gateway corresponding to the access gateway information comprises:
sending, by the access management network element to the first non-3GPP access gateway based on the non-3GPP radio access type of the first non-3GPP access gateway and the non-3GPP radio access type of the second non-3GPP access gateway, information used to release the first connection; and/or sending, to the second non-3GPP access gateway, information used to establish the second connection.

23. The method according to claim 20, wherein the method further comprises:
determining, by the access management network element, a non-3GPP radio access type of the first non-3GPP access gateway and a non-3GPP radio access type of the second non-3GPP access gateway based on a type of the non-3GPP access gateway; and
the sending, by the access management network element, the session management information to an access gateway corresponding to the access gateway information comprises:
sending, by the access management network element to the first non-3GPP access gateway based on the non-3GPP radio access type of the first non-3GPP access gateway and the non-3GPP radio access type of the second non-3GPP access gateway, information used to release the first connection; and/or sending, to the second non-3GPP access gateway, information used to establish the second connection.

24. A communication method, wherein the method comprises:
establishing, by user equipment, a first connection of the user equipment by using a first non-3GPP access gateway;
determining, by the user equipment, that switching from a first connection to a second connection needs to be performed;
selecting, by the user equipment based on policy information, a second non-3GPP access gateway corresponding to the second connection; and
establishing, by the user equipment, the second connection of the user equipment by using the second non-3GPP access gateway.

25. The method according to claim 24, wherein the selecting, by the user equipment based on policy information, a second non-3GPP access gateway corresponding to the second connection comprises:
selecting, by the user equipment, the second non-3GPP access gateway based on a slice corresponding to the first connection, wherein a slice corresponding to the second connection comprises the slice corresponding to the first connection; and/or
selecting, by the user equipment, the second non-3GPP access gateway based on a priority of the slice corresponding to the second connection.

26. The method according to claim 24 or 25, wherein the establishing, by the user equipment, the second connection of the user equipment by using a second non-3GPP access gateway comprises:
sending, by the user equipment, a request message to the second non-3GPP access gateway, wherein the request message is used to request to establish the second connection of the user equipment by using the second non-3GPP access gateway.

27. The method according to any one of claims 24 to 26, wherein the method further comprises:
receiving, by the user equipment, information that is sent by the first non-3GPP access gateway and that is used to release the first connection; and
releasing, by the user equipment, the first connection.

28. The method according to any one of claims 24 to 27, wherein the method further comprises:
performing, by the user equipment, data transmission by using the first connection and the second connection.

29. The method according to claim 28, wherein the method further comprises:
when data transmission of the first connection is completed, sending, by the user equipment, a connection release request message to the first non-3GPP access gateway.

30. The method according to claim 29, wherein the connection release request message comprises indication information, and the indication information indicates the first non-3GPP access gateway to send an end data packet to a user plane network element.

31. The method according to any one of claims 28 to 30, wherein the method further comprises:
receiving, by the user equipment, first address information allocated to the first connection; and
receiving, by the user equipment, second address information allocated to the second connection.

32. The method according to claim 31, wherein the performing, by the user equipment, data transmission by using the second connection comprises:
encapsulating, by the user equipment, a data packet based on the second address information, and sending the data packet by using the second connection.

33. A communication method, wherein the method comprises:
establishing, by a user plane network element, a first connection of user equipment by using a first non-3GPP access gateway;
receiving, by the user plane network element, third indication information, wherein the third indication information indicates to switch from a first connection to a second connection;
determining, by the user plane network element based on the third indication information, to switch from the first connection to the second connection; and
performing, by the user plane network element, data transmission by using the second connection.

34. The method according to claim 33, wherein the method further comprises:
receiving, by the user plane network element, second indication information, wherein the second indication information indicates that the user plane network element performs data transmission by using the first connection and the second connection; and
the performing, by the user plane network element, data transmission by using the second connection comprises:
performing, by the user plane network element, data transmission by using the first connection and the second connection.

35. The method according to claim 33 or 34, wherein the method further comprises:
receiving, by the user plane network element, an end data packet; and
sending, by the user plane network element, fourth indication information to a session management network element based on the end data packet.

36. The method according to any one of claims 33 to 35, wherein the method further comprises:
allocating, by the user plane network element based on a steering function supported by a session, address information different from address information of the first connection to the second connection; and
sending, by the user plane network element to the session management network element, the address information allocated to the second connection.

37. A communication method, wherein the method comprises:
receiving, by a first non-3GPP access gateway, a connection release request message; and
sending, by the first non-3GPP access gateway, an end data packet to a user plane network element.

38. A communication apparatus, comprising a processing unit and a transceiver unit, wherein
the transceiver unit is configured to establish a first connection of user equipment by using a first non-3GPP access gateway and receive a request message, wherein the request message is used to request to establish a second connection of the user equipment by using a second non-3GPP access gateway;
the processing unit is configured to determine, based on the request message, to switch from the first connection to the second connection; and
the transceiver unit is further configured to send, to an access management network element, session management information and access gateway information corresponding to the session management information.

39. The apparatus according to claim 38, wherein the access gateway information is indication information of a non-3GPP radio access type, and the indication information of the non-3GPP radio access type is used to determine an access gateway.

40. The apparatus according to claim 38 or 39, wherein the request message comprises first indication information, and the first indication information indicates to switch from the first connection to the second connection; and
the processing unit is specifically configured to determine, based on the first indication information, to switch from the first connection to the second connection.

41. The apparatus according to any one of claims 38 to 40, wherein the request message comprises an access type of the second connection; and
the processing unit is specifically configured to determine, based on an access type of the first connection and the access type of the second connection, to switch from the first connection to the second connection.

42. The apparatus according to claim 41, wherein the access type of the first connection or the access type of the second connection is a non-3GPP radio access type.

43. The apparatus according to claim 39 or 42, wherein the non-3GPP radio access type comprises an untrusted non-3GPP access type, a trusted non-3GPP access type, an untrusted wireless local area network WLAN access type, or a trusted WLAN access type.

44. The apparatus according to any one of claims 41 to 43, wherein the transceiver unit is further configured to send the access type of the second connection to a policy control network element, and the access type of the second connection is used to determine a steering policy.

45. The apparatus according to any one of claims 38 to 44, wherein the session management information is information used to establish the second connection, and the access gateway information corresponding to the session management information is information about the second non-3GPP access gateway; and/or
the session management information is information used to release the first connection, and the access gateway information corresponding to the session management information is information about the first non-3GPP access gateway.

46. The apparatus according to any one of claims 38 to 44, wherein the transceiver unit is further configured to send second indication information to a user plane network element, and the second indication information indicates that the user plane network element performs data transmission by using the first connection and the second connection.

47. The apparatus according to any one of claims 38 to 44, wherein the transceiver unit is further configured to send third indication information to the user plane network element, and the third indication information indicates to switch from the first connection to the second connection.

48. The apparatus according to claim 46 or 47, wherein the transceiver unit is further configured to receive fourth indication information sent by the user plane network element, and the fourth indication information indicates to release the first connection; and
the session management information is information used to release the first connection, and the access gateway information corresponding to the session management information is information about the first non-3GPP access gateway.

49. A communication apparatus, comprising a processing unit and a transceiver unit, wherein
the transceiver unit is configured to establish a first connection of user equipment by using a first non-3GPP access gateway and receive a first request message, wherein the first request message is used to request to establish a second connection of the user equipment by using a second non-3GPP access gateway;
the processing unit is configured to determine to switch from the first connection to the second connection; and
the transceiver unit is further configured to: send a second request message to a session management network element, wherein the second request message is used to request to establish the second connection of the user equipment by using the second non-3GPP access gateway; receive session management information and access gateway information corresponding to the session management information; and send the session management information to an access gateway corresponding to the access gateway information.

50. The apparatus according to claim 49, wherein the access gateway information is indication information of a non-3GPP radio access type, and the indication information of the non-3GPP radio access type is used to determine an access network element.

51. The apparatus according to claim 49 or 50, wherein the processing unit is specifically configured to determine that the second non-3GPP access gateway supports a slice.

52. The apparatus according to any one of claims 49 to 51, wherein the processing unit is further configured to determine that the slice supported by the second non-3GPP access gateway comprises a slice of the second connection.

53. The apparatus according to any one of claims 49 to 52, wherein the second request message comprises first indication information, and the first indication information indicates to switch from the first connection to the second connection; and/or
the second request message comprises an access type of the second connection.

54. The apparatus according to claim 53, wherein the access type of the second connection is the non-3GPP radio access type.

55. The apparatus according to claim 50 or 54, wherein the non-3GPP radio access type comprises an untrusted non-3GPP access type, a trusted non-3GPP access type, an untrusted wireless local area network WLAN access type, or a trusted WLAN access type.

56. The apparatus according to any one of claims 49 to 55, wherein the session management information is information used to establish the second connection, and the access gateway information corresponding to the session management information is information about the second non-3GPP access gateway; and/or
the session management information is information used to release the first connection, and the access gateway information corresponding to the session management information is information about the first non-3GPP access gateway.

57. The apparatus according to claim 56, wherein the processing unit is further configured to store first identification information of the first connection or the first non-3GPP access gateway, or a type of the first non-3GPP access gateway; and store second identification information of the second connection or the second non-3GPP access gateway, or a type of the second non-3GPP access gateway.

58. The apparatus according to claim 57, wherein the processing unit is further configured to determine, based on the first identification information and the second identification information, the first non-3GPP access gateway and the second non-3GPP access gateway; and
the transceiver unit is specifically configured to send, to the first non-3GPP access gateway, information used to release the first connection; and/or send, to the second non-3GPP access gateway, information used to establish the second connection.

59. The apparatus according to claim 57, wherein the transceiver unit is further configured to send, to the first non-3GPP access gateway based on a non-3GPP radio access type of the first non-3GPP access gateway and a non-3GPP radio access type of the second non-3GPP access gateway, information used to release the first connection; and/or send, to the second non-3GPP access gateway, information used to establish the second connection.

60. The apparatus according to claim 57, wherein the processing unit is further configured to determine, based on a type of the non-3GPP access gateway, a non-3GPP radio access type of the first non-3GPP access gateway and a non-3GPP radio access type of the second non-3GPP access gateway; and
the transceiver unit is specifically configured to send, to the first non-3GPP access gateway based on the non-3GPP radio access type of the first non-3GPP access gateway and the non-3GPP radio access type of the second non-3GPP access gateway, information used to release the first connection; and/or send, to the second non-3GPP access gateway, information used to establish the second connection.

61. A communication apparatus, comprising a processing unit and a transceiver unit, wherein
the transceiver unit is configured to establish a first connection of user equipment by using a first non-3GPP access gateway;
the processing unit is configured to determine that switching from the first connection to a second connection needs to be performed; and select, based on policy information, a second non-3GPP access gateway corresponding to the second connection; and
the transceiver unit is further configured to establish the second connection of the user equipment by using the second non-3GPP access gateway.

62. The apparatus according to claim 61, wherein the processing unit is specifically configured to select the second non-3GPP access gateway based on a slice corresponding to the first connection, wherein a slice corresponding to the second connection comprises the slice corresponding to the first connection; and/or select the second non-3GPP access gateway based on a priority of the slice corresponding to the second connection.

63. The apparatus according to claim 61 or 62, wherein the transceiver unit is specifically configured to send a request message to the second non-3GPP access gateway, wherein the request message is used to request to establish the second connection of the user equipment by using the second non-3GPP access gateway.

64. The apparatus according to any one of claims 61 to 63, wherein the transceiver unit is further configured to receive information that is sent by the first non-3GPP access gateway and that is used to release the first connection; and
the processing unit is further configured to release the first connection.

65. The apparatus according to any one of claims 61 to 64, wherein the transceiver unit is further configured to perform data transmission by using the first connection and the second connection.

66. The apparatus according to claim 65, wherein the transceiver unit is further configured to when data transmission of the first connection is completed, send a connection release request message to the first non-3GPP access gateway.

67. The apparatus according to claim 66, wherein the connection release request message comprises indication information, and the indication information indicates the first non-3GPP access gateway to send an end data packet to a user plane network element.

68. The apparatus according to any one of claims 65 to 67, wherein the transceiver unit is further configured to receive first address information allocated to the first connection; and receive second address information allocated to the second connection.

69. The apparatus according to claim 68, wherein the transceiver unit is further configured to encapsulate a data packet based on the second address information, and send the data packet by using the second connection.

70. A communication apparatus, comprising a processing unit and a transceiver unit, wherein
the transceiver unit is configured to establish a first connection of user equipment by using a first non-3GPP access gateway and receive third indication information, wherein the third indication information indicates to switch from the first connection to a second connection;
the processing unit is configured to determine, based on the third indication information, to switch from the first connection to the second connection; and
the transceiver unit is further configured to perform data transmission by using the second connection.

71. The apparatus according to claim 70, wherein the transceiver unit is further configured to receive second indication information, and the second indication information indicates that the user plane network element performs data transmission by using the first connection and the second connection; and perform data transmission by using the first connection and the second connection.

72. The apparatus according to claim 70 or 71, wherein the transceiver unit is further configured to receive an end data packet; and send fourth indication information to a session management network element based on the end data packet.

73. The apparatus according to any one of claims 70 to 72, wherein the processing unit is further configured to allocate, based on a steering function supported by a session, address information different from address information of the first connection to the second connection; and
the transceiver unit is further configured to send, to the session management network element, the address information allocated to the second connection.

74. A communication apparatus, comprising a processing unit and a transceiver unit, wherein
the transceiver unit is configured to receive a connection release request message;
the processing unit is configured to generate an end data packet based on the connection release request message; and
the transceiver unit is further configured to send the end data packet to a user plane network element.

75. A communication apparatus, comprising a processor and a memory, wherein the processor is coupled to the memory;
the memory stores a computer program or instructions; and
the processor is configured to execute the computer program or the instructions stored in the memory, so that the apparatus performs the method according to any one of claims 1 to 37.

76. A communication apparatus, comprising a logic circuit and an interface circuit, wherein the interface circuit is configured to: receive a signal from another communication apparatus other than the communication apparatus and transmit the signal to the logic circuit, or send a signal from the logic circuit to another communication apparatus other than the communication apparatus, and the logic circuit is configured to execute code instructions to implement the method according to any one of claims 1 to 37.

77. A computer-readable storage medium, comprising a computer program or instructions, wherein when the computer program or the instructions is/are run on a computer, the method according to any one of claims 1 to 37 is performed.

78. A computer program product, comprising a computer program or instructions, wherein when the computer program or the instructions is/are run on a computer, the method according to any one of claims 1 to 37 is performed.

79. A communication system, comprising a session management network element configured to perform the method according to any one of claims 1 to 11, and an access management network element configured to perform the method according to any one of claims 12 to 23.

80. A chip system, wherein the chip system comprises:
a processor and a memory, wherein the processor is coupled to the memory, the memory is configured to store a program or instructions, and when the program or the instructions is/are executed by the processor, the method according to any one of claims 1 to 37 is implemented.
